# EUROPÄISCHE PATENTSCHRIFT

(11) **EP 2 163 339 B1**
(45) Veröffentlichungstag und Bekanntmachung des Hinweises auf die Patenterteilung: **02.11.2016**
(21) Anmeldenummer: 08405223.2
(22) Anmeldetag: 11.09.2008
(51) Int. Cl.: B23K 26/38, B23K 26/08, B23K 26/14, G05B 19/416

(54) **Laserschneidanlage zum Schneiden eines Werkstücks mit einem Laserstrahl mit einer variablen Schneidgeschwindigkeit**
Laser cutting assembly for cutting a work piece with a laser beam with a variable cutting speed
Installation de coupe au laser destinée à couper une pièce usinée à l'aide d'un rayon laser à vitesse de coupe variable

(43) Veröffentlichungstag der Anmeldung: 17.03.2010
(73) Patentinhaber: Bystronic Laser AG, 3362 Niederönz (CH)
(72) Erfinder: Beutler, Beat, 3363 Oberönz (CH)
(74) Vertreter: EGLI-EUROPEAN PATENT ATTORNEYS

(56) Entgegenhaltungen:
- EP-A- 0 506 968
- JP-A- 6 277 860
- JP-A- 7 195 186
- US-A- 5 688 418

## Beschreibung

Die Erfindung bezieht sich auf eine Laserschneidanlage zum Schneiden eines Werkstücks mit einem Laserstrahl entlang einer Schneidlinie mit einer variablen Schneidgeschwindigkeit.

Beim Schneiden eines Werkstücks mit einem Laserstrahl wird gewöhnlich ein Laserstrahl auf die Oberfläche des Werkstücks fokussiert und dabei das Werkstück lokal derart erhitzt, dass das Werkstück in der Umgebung des Fokuspunktes des Laserstrahls schmilzt, bis ein durchgehendes Loch entsteht. Wird der fokussierte Laserstrahl zusätzlich relativ zum Werkstück bewegt, so lässt sich dementsprechend das Werkstück entlang der gesamten Bahn, die der Laserstrahl bei der Bewegung auf dem Werkstück überstreicht, durchtrennen (schneiden). Dabei entstehen im Wesentlichen parallel zur Ausbreitungsrichtung des Laserstrahls und entlang der Bahn, die der Laserstrahl beim Schneiden überstreicht, mehr oder weniger glatte Schnittflächen. Der Bereich des Werkstücks, der beim Schneiden mit dem Laserstrahl entfernt wird, soll im Folgenden als "Schneidbahn" des Laserstrahls bezeichnet werden.

Der jeweilige Schneidprozess kann bekanntlich mit Prozessgasen beeinflusst werden. Zu diesem Zweck lässt man gewöhnlich ein oder mehrere Prozessgase aus Düsen, die auf die Umgebung des Fokuspunktes des Laserstrahls gerichtet sind, unter einem Druck auf das durch die Einwirkung des Laserstrahls geschmolzene Material strömen. Dies kann einen Einfluss auf die Effizienz des Schneidens und die jeweilige Qualität der erzeugten Schnittflächen haben (z.B. im Hinblick auf deren Rauigkeit).

Kommerzielle Laserschneidanlagen sollen in der Regel flexibel darauf ausgelegt sein, dass sie - abhängig vom jeweiligen Bedarf eines Benutzers - eine Vielfalt von Aufgaben erledigen können: Sie sollen beispielsweise Werkstücke unterschiedlicher Dicke und aus unterschiedlichen Werkstoffen schneiden können und sie sollen geeignet sein, Konturen mit beliebigen Formen (z.B. gerade Konturen, runde Konturen, Konturen mit einer oder mehreren Ecken) und unterschiedlichen Abmessungen (kleine Konturen, grosse Konturen) zu erzeugen, und dies bevorzugterweise mit hoher Qualität (die Schnittflächen sollen möglichst eben und gleichmässig sein) und mit hoher Schneidgeschwindigkeit (der Vorschub in der Bewegungsrichtung des Laserstrahls soll pro Zeiteinheit möglichst gross sein).

Um diesen Aufgaben gerecht werden zu können, verfügt eine Laserschneidanlage in der Regel über einen bewegbaren Bearbeitungskopf zur Platzierung des Laserstrahls auf dem jeweiligen Werkstück, welcher Bearbeitungskopf eine verstellbare Fokussierungsoptik und eine Vorrichtung zum Beaufschlagen des jeweiligen Werkstücks mit Prozessgasen umfasst. Weiterhin ist meist eine Benutzerschnittstelle zur Spezifikation der jeweiligen "Schneidlinie" vorhanden, d.h. über diese Benutzerschnittstelle kann ein Benutzer die geometrische Form einer Kontur definieren, die ein Werkstück während eines Schneidprozesses idealerweise erhalten soll. Weiterhin verfügt eine Laserschneidanlage in der Regel über eine Steuervorrichtung zum Steuern einer Bewegung des Bearbeitungskopfes entlang der jeweils spezifizierten Schneidlinie relativ zu dem jeweiligen Werkstück und zum Steuern einer Mehrzahl von Prozessgrössen eines Schneidprozesses.

Durch die Steuerung der Bewegung des Bearbeitungskopfes wird erreicht, dass während des Schneidprozesses eine Schneidbahn des Laserstrahls entlang der Schneidlinie erzeugbar ist. Laserschneidmaschinen verfügen in der Regel über eine numerische Bahnsteuerung für den Bearbeitungskopf. Zur Durchführung der Bahnsteuerung genügt in der Regel die Angabe einer "Mindest-Bahngenauigkeit" des Laserstrahls, d.h. die Angabe einer zulässigen maximalen Abweichung der Schneidbahn des Laserstrahls von der jeweils spezifizierten Schneidlinie. Auf der Grundlage dieser Angabe kann die Steuerung den jeweiligen Ort des Bearbeitungskopfes und den jeweiligen Vorschub bzw. die Geschwindigkeit steuern.

Eine besondere Herausforderung stellt die Steuerung der Prozessgrössen des Schneidprozesses dar, d.h. die Steuerung aller Parameter, die - abgesehen von der Steuerung der Bewegung des Bearbeitungskopfes (Bahnsteuerung) - das Ergebnis des Schneidprozesses beeinflussen. Es hat sich nämlich herausgestellt, dass es keinen Satz von Prozessparametern gibt, der für beliebige Anwendungen (unabhängig von der Form und Grösse der zu schneidenden Kontur und unabhängig von der Dicke und dem Werkstoff des jeweiligen Werkstücks) optimal ist.

Es ist beispielsweise möglich, einen Satz von Prozessparametern (z.B. Laserleistung, Einstellung der Fokussierungsoptik und Parameter der Versorgung mit Prozessgasen) anzugeben, auf dessen Grundlage lange, gerade bzw. annähernd gerade Konturen mit hoher Geschwindigkeit (d.h. mit einem grossen Vorschub pro Zeiteinheit) geschnitten werden können, insbesondere im Falle dünner Bleche mit einer Dicke von weniger als 2 mm Dicke. "Gerade bzw. annähernd gerade Konturen" soll bedeuten, dass die zugehörige Schneidlinie keinen Richtungswechsel (d.h. benachbarte Abschnitte der Schneidlinie liegen auf einer Geraden) oder nur einen "kleinen" Richtungswechsel (d.h. benachbarte Abschnitte der Schneidlinie liegen zwar nicht auf einer geraden, ihre Richtungen weichen allerdings nur um einen "kleinen" Winkel von weniger als 1° voneinander ab) aufweist. Wenn die vorgegebene Schneidlinie einen "grossen" Richtungswechsel des Bearbeitungskopfes erfordert (beispielsweise im Falle einer Bewegung um eine Ecke mit einem Winkel von 90° oder mehr), dann führt die Bahnsteuerung des Bearbeitungskopfes bei einer übermässigen Geschwindigkeit des Bearbeitungskopfes während des Richtungswechsels zu einer grossen Abweichung von der vorgegebenen Schneidlinie. Die Kontur der erzeugten Schneidkante erfüllt in diesem Fall meist nicht die Anforderungen an die Genauigkeit. Vollzieht man den "grossen" Richtungswechsel allerdings mit einer reduzierten Geschwindigkeit, die aufgrund der Bahnsteuerung zu einer geringeren (gegebenenfalls minimalen) Abweichung von der Schneidlinie im Bereich des Richtungswechsels führt, hält aber denselben Satz von Prozessparametern bei, auf dessen Grundlage lange, gerade bzw. annähernd gerade Konturen mit hoher Geschwindigkeit geschnitten werden können, so erhält man in der Regel im Bereich des Richtungswechsels defekte Schnittkanten mit einer unakzeptablen Rauigkeit.

JP 07 195186 offenbart eine Laserbearbeitungsmaschine, bei welcher dann, wenn eine Geschwindigkeit in Richtung eines Eckpunkts P5 reduziert wird, Maschineneinstellungen wie Laserleistung, Frequenz, Betriebsart, Art des Prozessgases, Gasdruck etc. beibehalten werden. Während der Eckenbearbeitung, wenn die Geschwindigkeit im Eckpunkt P5 für eine vorgegebene Verweilzeit T3 bei Null gehalten wird, werden die Einstellungen geändert. Wird die Geschwindigkeit wieder erhöht, werden die Einstellungen wieder auf die vor der Geschwindigkeitsreduktion vorliegenden Einstellungen zurückgestellt.

US 5,688,418 offenbart ein Laser-Schneidverfahren mit zwei Gruppen unterschiedlicher Schnitteinstellungen. Die erste Gruppe von Schnitteinstellungen werden zum Schneiden eines Werkstücks bis nahe dem Endpunkt eines Schnittes verwendet. Die zweite Gruppe von Schnitteinstellungen werden für das Schneiden des Werkstück zwischen diesem Endpunkt des Schnittes, entlang dem Umfang einer Bohrung und einem Punkt nahe dem Endpunkt des Schnittes verwendet. Die Fokussierungsposition des Lasers bleibt in beiden Einstellungen gleich. Auch andere Einstellungen sind gleich der beiden Gruppen bleiben unverändert.

EP 0 506 968 A1 offenbart ein Verfahren zum Schneiden eines Werkstücks längs einer Linie, welche eine Ecke (Richtungswechsel) aufweist. Gemäss diesem Verfahren wird die Geschwindigkeit des Bearbeitungskopfes während der Bewegung in Richtung auf die Ecke reduziert, wobei gleichzeitig die zum Schneiden zur Verfügung stehende Leistung des Laserstrahls reduziert wird. Entsprechend wird die Geschwindigkeit des Bearbeitungskopfes während der Bewegung von der Ecke weg wieder erhöht, wobei gleichzeitig die zum Schneiden zur Verfügung stehende Leistung des Laserstrahls erhöht wird. Durch die simultane Reduktion der Geschwindigkeit des Bearbeitungskopfes und der Leistung des Laserstrahls sinkt die thermische Belastung des Werkstücks während der Bearbeitung der Ecke. Dadurch wird die Qualität der Schnittflächen im Bereich der Ecke zwar verbessert, die Qualitätsverbesserung ist allerdings begrenzt, zuma1 trotzdem beachtliche Unregelmässigkeiten der Schnittflächen im Bereich der Ecke auftreten. Andere Parameter eines Schneidprozesses als die zum Schneiden zur Verfügung stehende Leistung des Laserstrahls werden in diesem Verfahren nicht zur Optimierung herangezogen.

Bei konventionellen Laserschneidanlagen besteht für den Benutzer der Anlage meist die Möglichkeit, bei einer Programmierung einer Anwendung, welche die jeweils im Schneidprozess zu bearbeitende Schneidlinie festlegt, zusätzlich bestimmte Festlegungen bezüglich der jeweiligen Prozessgrössen des Schneidprozesses zu treffen und auf diese Weise über die Benutzerschnittstelle den jeweiligen Schneidprozess hinsichtlich der jeweiligen Schneidlinie zu optimieren. Es ist beispielsweise möglich, in der Programmierung der jeweiligen Anwendung die Bearbeitung der Schneidlinie in bestimmte Abschnitte zu zerlegen und für verschiedene Abschnitte unterschiedliche Prozessparameter festzulegen. Um den Schneidprozess im Falle einer Schneidlinie, die einen Richtungswechsel aufweist, zu optimieren, kann der Benutzer beispielsweise einen oder mehrere Abschnitte der Schneidlinie in der Umgebung eines Richtungswechsels spezifizieren (beispielsweise durch Angaben eines Anfangspunktes und eines Endpunktes des jeweiligen Abschnitts oder durch Angabe einer Zeitdauer, die der Bearbeitungskopf benötigt, um den spezifizierten Abschnitt zu durchlaufen) und für jeden dieser Abschnitte beispielsweise eine Änderung der Geschwindigkeit des Bearbeitungskopfes oder Änderungen bestimmter Prozessgrössen des Schneidprozesses veranlassen, beispielsweise eine Änderung des Druckes eines Prozessgases oder der Leistung des Laserstrahls. Die jeweiligen Änderungen der Prozessgrössen des Schneidprozesses sind in diesem Fall nicht mit der momentanen Geschwindigkeit des Bearbeitungskopfes korreliert, da die Änderungen der Geschwindigkeit des Bearbeitungskopfes und Änderungen der Prozessgrössen des Schneidprozesses unabhängig voneinander gesteuert werden. Diese Art der Einflussnahme eines Benutzers über die Benutzerschnittstelle ist mit einer Reihe von Nachteilen verbunden. Einerseits muss der Benutzer über die notwendigen technologischen Kenntnisse hinsichtlich des jeweiligen Schneidprozesses verfügen, um überhaupt den Prozessablauf optimieren zu können. Weiterhin müsste diese Optimierung für jede Schneidlinie individuell über die Benutzerschnittstelle programmiert werden, und zwar für jeden Richtungswechsel einzeln, selbst wenn eine Schneidlinie mehrere identische Richtungswechsel in verschiedenen Abschnitten der Schneidlinie aufweist (beispielsweise mehrere Ecken mit identischen Winkeln). Diese Art der Optimierung ist deshalb extrem aufwändig, selbst wenn der Benutzer die nötigen Kenntnisse hinsichtlich des Schneidprozesses besitzt.

Der Erfindung liegt deshalb die Aufgabe zugrunde, die erwähnten Nachteile zu vermeiden und eine Laserschneidanlage zu schaffen, welche es einem Benutzer mit relativ geringem Aufwand ermöglicht, bei einer relativ hohen durchschnittlichen Schneidgeschwindigkeit möglichst gleichmässige Schnittflächen zu erzielen, insbesondere in Fällen, in denen ein Werkstück mit einer variablen Schneidgeschwindigkeit geschnitten werden soll, beispielsweise beim Schneiden längs Schneidlinien mit grossen Richtungswechseln bzw. mit einer Vielzahl von Richtungswechseln.

Diese Aufgabe wird gelöst durch eine Laserschneidanlage mit den Merkmalen des Anspruchs 1.

Die erfindungsgemässe Laserschneidanlage ist für das Schneiden eines Werkstücks mit einem Laserstrahl entlang einer Schneidlinie mit einer variablen Schneidgeschwindigkeit ausgelegt und umfasst einen bewegbaren Bearbeitungskopf zur Platzierung des Laserstrahls auf dem jeweiligen Werkstück, eine Benutzerschnittstelle zur Spezifikation der jeweiligen Schneidlinie und zur Spezifikation einer Mindest-Bahngenauigkeit des Laserstrahls, und eine Steuervorrichtung zum Steuern einer Bewegung des Bearbeitungskopfes entlang der Schneidlinie relativ zu dem jeweiligen Werkstück und zum Steuern einer Mehrzahl von Prozessgrössen eines Schneidprozesses, wobei bei der Bewegung des Bearbeitungskopfes während des Schneidprozesses eine Schneidbahn des Laserstrahls entlang der Schneidlinie erzeugbar ist.

In diesem Zusammenhang wird zwischen zwei verschiedenen Gruppen von Prozessgrössen des jeweiligen Schneidprozesses unterschieden. Eine erste Teilmenge der Prozessgrössen umfasst ausschliesslich eine oder mehrere Prozessgrössen, welche einen Einfluss auf die zum Schneiden zur Verfügung stehende Leistung des Laserstrahls haben. Eine zweite Teilmenge der Prozessgrössen umfasst ausschliesslich eine oder mehrere Prozessgrössen, welche keinen Einfluss auf die zum Schneiden zur Verfügung stehende Leistung des Laserstrahls haben. Diejenigen von der Steuervorrichtung kontrollierten Grössen, welche eine Steuerung der jeweiligen Bahn des Bearbeitungskopfes relativ zum Werkstück betreffen (d.h. Parameter einer Bahnsteuerung) werden in diesem Zusammenhang nicht als Prozessgrösse eines Schneidprozesses betrachtet.

Die jeweilige Bewegung des Bearbeitungskopfes ist während des Schneidprozesses von der Steuervorrichtung derart steuerbar, dass die Schneidbahn des Laserstrahls der Schneidlinie innerhalb der Mindest-Bahngenauigkeit folgt, wobei ein kinematischer Zustand des Bearbeitungskopfes durch Erhöhen oder Verringern der Geschwindigkeit des Bearbeitungskopfes relativ zum Werkstück veränderbar ist. Die jeweilige Änderung der Geschwindigkeit des Bearbeitungskopfes ist eine Grundbedingung für eine Einhaltung von vorgegebenen Toleranzzen hinsichtlich einer Abweichung der Schneidbahn des Laserstrahls von der jeweils über die Benutzerschnittstelle spezifizierten Schneidlinie.

Die Steuervorrichtung umfasst weiterhin Registriermittel zum Registrieren einer Veränderung des kinematischen Zustands des Bearbeitungskopfes und/oder mindestens eines Wertes der Geschwindigkeit des Bearbeitungskopfes und/oder eines Wertes für eine Veränderung der Geschwindigkeit des Bearbeitungskopfes. Die Steuervorrichtung verfügt deshalb über eine Information über die momentane Geschwindigkeit des Bearbeitungskopfes relativ zum Werkstück zumindest für die Zeitpunkte, an denen entsprechende Geschwindigkeitswerte von den jeweiligen Registriermitteln erfasst wurden.

Weiterhin ist die Steuervorrichtung so konzipiert, dass mindestens eine Prozessgrösse der ersten Teilmenge mittels der Steuervorrichtung bei oder nach einer Veränderung des kinematischen Zustands des Bearbeitungskopfes in Abhängigkeit von mindestens einem der jeweils registrierten Werte für die Geschwindigkeit des Bearbeitungskopfes und/oder von mindestens einem der jeweils registrierten Werte für eine Veränderung der Geschwindigkeit des Bearbeitungskopfes veränderbar ist. Eine Änderung der zum Schneiden zur Verfügung stehenden Leistung des Laserstrahls ist deshalb mit der momentanen Geschwindigkeit des Bearbeitungskopfes relativ zum Werkstück korreliert.

Gemäss der Erfindung ist mindestens eine Prozessgrösse der zweiten Teilmenge mittels der Steuervorrichtung bei oder nach einer Änderung des kinematischen Zustands des Bearbeitungskopfes in Abhängigkeit von der Geschwindigkeit des Bearbeitungskopfes veränderbar, wobei die jeweilige Änderung der jeweiligen Prozessgrösse in Abhängigkeit von mindestens einem variablen Steuerparameter steuerbar ist, dessen jeweiliger Wert von der Steuervorrichtung nach in der Steuervorrichtung implementierten Regeln in Abhängigkeit von mindestens einem der jeweils registrierten Werte der Geschwindigkeit des Bearbeitungskopfes und/oder von mindestens einem der jeweils registrierten Werte für eine Veränderung der Geschwindigkeit des Bearbeitungskopfes bestimmbar ist.

Die Steuervorrichtung der erfindungsgemässen Laserschneidanlage hat den Vorteil, dass ein Benutzer die Laserschneidanlage zur Spezifikation einer Anwendung lediglich über die Benutzerschnittstelle mit Benutzerdaten versorgen muss, welche eine Schneidlinie (d.h. die Geometrie der Kontur eines zu schneidenden Teils) und eine Mindest-Bahngenauigkeit (d.h. eine zulässige Toleranz hinsichtlich der Abweichung der Schneidbahn des Laserstrahls von der vom Benutzer spezifizierten Schneidlinie) definiert. Die Steuervorrichtung der Laserschneidanlage kann allein auf der Grundlage dieser Benutzerdaten die Bearbeitung eines Werkstückes steuern und während der Bearbeitung Prozessgrössen des Schneidprozesses optimieren.

Zunächst einmal ist gewährleistet, dass die Steuervorrichtung im Falle einer mindestens einen Richtungswechsel umfassenden Schneidlinie die jeweilige Geschwindigkeit des Bearbeitungskopfes in einem vorgegebenen Geschwindigkeitsbereich variiert, um insbesondere im Bereich eines der jeweiligen Richtungswechsel eine vorgegebene Toleranz hinsichtlich der Abweichung der Schneidbahn des Laserstrahls und der jeweils spezifizierten Schneidlinie einhalten zu können.

Weiterhin ist gewährleistet, dass die Steuervorrichtung ausser einer Prozessgrösse der ersten Teilmenge auch mindestens eine Prozessgrösse der zweiten Teilmenge automatisch im Falle einer Veränderung der Geschwindigkeit des Bearbeitungskopfes zum Zwecke einer Optimierung verändern kann. Die jeweiligen Änderungen der jeweiligen Prozessgrössen sind dabei korreliert mit einem einzigen Parameter: der momentanen Geschwindigkeit des Bearbeitungskopfes.

Dadurch, dass die jeweilige Änderung der jeweiligen Prozessgrösse in Abhängigkeit von mindestens einem variablen Steuerparameter steuerbar ist und der jeweilige Wert dieses Steuerparameters von der Steuervorrichtung nach Regeln, die in der Steuervorrichtung implementiert sind, in Abhängigkeit von mindestens einem der jeweils registrierten Werte der Geschwindigkeit des Bearbeitungskopfes und/oder von mindestens einem der jeweils registrierten Werte für eine Veränderung der Geschwindigkeit des Bearbeitungskopfes bestimmbar ist, ist sichergestellt, dass die Steuervorrichtung die jeweiligen Prozessgrössen bei beliebigen Schneidlinien (unabhängig von der jeweiligen Form und Grösse der Kontur des zu schneidenden Teils) während des Schneidprozesses gezielt verändern kann, ohne dass der Benutzer der Steuervorrichtung Angaben bezüglich der Änderungen der Prozessgrössen über die Benutzerschnittstelle mitteilen muss.

Dadurch, dass ein Werkstück mit der erfindungsgemässen Laserschneidanlage mit einer variablen Schneidgeschwindigkeit geschnitten werden kann und zusätzlich eine automatische Anpassung von Prozessgrössen der ersten Teilmenge und der zweiten Teilmenge an die momentane Geschwindigkeit des Bearbeitungskopfes gewährleistet ist, können insbesondere Schnitte längs Schneidlinien mit grossen Richtungswechseln bzw. mit einer Vielzahl von Richtungswechseln in einer kürzeren Zeit durchgeführt werden, wobei die Qualität der jeweiligen Schnittfläche über die gesamte Länge der Schneidlinie optimiert ist. Auf diese Weise können selbst im Falle von Schneidlinien mit grossen Richtungswechseln bzw. mit einer Vielzahl von Richtungswechseln besonders gleichmässige Schnittflächen mit einer hohen Effizienz und mit einem relativ geringen Aufwand für den Benutzer erzielt werden.

Zur ersten Teilmenge der Prozessgrössen gehören insbesondere die folgenden Prozessgrössen: die Leistung des Laserstrahls, eine Pulsdauer eines Laserpulses, ein zeitlicher Abstand zwischen aufeinanderfolgenden Laserpulsen und/oder eine Laserpuls-Rate.

Zur zweiten Teilmenge der Prozessgrössen gehören insbesondere die folgenden Prozessgrössen: eine Spezifikation einer Lage einer Fokussierungsoptik zur Fokussierung des Laserstrahls relativ zum Werkstück, eine Spezifikation eines Strahldurchmessers des Laserstrahls, eine Spezifikation einer Betriebsart eines Lasers zur Erzeugung des Laserstrahls, eine Spezifikation einer Bahngenauigkeit, eine räumliche Verschiebung eines Fokuspunktes des Laserstrahls bezüglich der Schneidlinie, eine Lage einer Prozessgas-Düse relativ zum Werkstück, eine Spezifikation einer Art eines Prozessgases, ein Druck eines Prozessgases.

In einer Ausführungsform der erfindungsgemässen Laserschneidanlage ist die jeweilige Prozessgrösse mit mindestens einem dieser Prozessgrösse zugeordneten Stellglied beeinflussbar und das jeweilige Stellglied mit einem von der Steuervorrichtung erzeugbaren, einen Sollwert der Prozessgrösse repräsentierenden Steuersignal ansteuerbar, wobei der Sollwert der variable Steuerparameter ist. Es wird also angenommen, dass der Sollwert der jeweiligen Prozessgrösse von der Geschwindigkeit des Bearbeitungskopfes abhängig ist.

Weiterhin ist für die jeweilige Prozessgrösse eine funktionelle Abhängigkeit des Sollwertes der Prozessgrösse von der Geschwindigkeit des Bearbeitungskopfes in der Steuervorrichtung implementiert. Eine Realisierung einer Implementierung einer derartigen funktionellen Abhängigkeit ist auf mehrere Arten möglich. Als eine Variante kann beispielsweise ein für die Steuervorrichtung zugänglicher Speicher angesehen werden, in dem die jeweiligen Werte, die der jeweilige Sollwert für bestimmte Werte der Geschwindigkeit des Bearbeitungskopfes oder für bestimmte Bereiche dieser Geschwindigkeit annimmt, abgelegt sind. Weitere Werte können durch Interpolation oder Extrapolation der gespeicherten Werte bestimmt werden. Eine andere Variante ist beispielsweise eine Implementierung eines von der Steuervorrichtung ausführbaren mathematischen Algorithmus, welcher einem Wert der Geschwindigkeit des Bearbeitungskopfes oder einem Bereich von Geschwindigkeiten jeweils den Wert zuordnet, welchen der Sollwert für den jeweiligen Wert der Geschwindigkeit oder für den jeweiligen Bereich der Geschwindigkeit annimmt. Der Algorithmus kann von der Steuervorrichtung im Betrieb der Laserschneidanlage herangezogen werden, um für die jeweils registrierten Werte der Geschwindigkeit des Bearbeitungskopfes jeweils den entsprechenden Sollwert zu bestimmen.

Die funktionelle Abhängigkeit der jeweiligen Sollwerte von der Geschwindigkeit des Bearbeitungskopfes kann jeweils experimentell ermittelt und anschliessend in der Steuervorrichtung implementiert werden. Die jeweiligen Sollwerte können für Werkstücke unterschiedlicher Dicke und für unterschiedliche Werkstoffe jeweils verschieden sein. In der Steuervorrichtung können deshalb verschiedene Sätze von Sollwerten für Werkstücke unterschiedlicher Dicke und für unterschiedliche Werkstoffe bereitgestellt werden.

Um eine Anpassung der jeweiligen Prozessgrösse an die jeweilige Geschwindigkeit des Bearbeitungskopfes zu ermöglichen, ist von der Steuervorrichtung mindestens ein Steuersignal zum Ansteuern des dieser Prozessgrösse zugeordneten Stellgliedes erzeugbar, welches Steuersignal denjenigen Sollwert der jeweiligen Prozessgrösse repräsentiert, der einem der jeweils registrierten Werte für die Geschwindigkeit des Bearbeitungskopfes gemäss der implementierten funktionellen Abhängigkeit des Sollwertes der jeweiligen Prozessgrösse von der Geschwindigkeit des Bearbeitungskopfes zugeordnet ist. Dadurch, dass die Steuervorrichtung mittels der Registriermittel während eines Schneidprozesses jeweils eine Information über die momentane Geschwindigkeit des Bearbeitungskopfes erhält, kann die Steuervorrichtung mittels der in der Steuervorrichtung implementierten funktionellen Abhängigkeit des Sollwertes der Prozessgrösse von der Geschwindigkeit automatisch und eigenständig (d.h. ohne weitere Angaben des Benutzers im Zusammenhang mit der Spezifikation der jeweiligen Schneidlinie) den jeweiligen Sollwert der Prozessgrösse bestimmen und entsprechende, den jeweiligen Sollwert repräsentierende Steuersignale zur Ansteuerung des jeweiligen Stellgliedes erzeugen.

Weitere Einzelheiten der Erfindung und insbesondere beispielhafte Ausführungsformen der erfindungsgemässen Vorrichtung und des erfindungsgemässen Verfahrens werden im Folgenden anhand der beigefügten Zeichnungen erläutert. Es zeigen:
- Fig. 1: eine schematische Darstellung einer erfindungsgemässen Laserschneidanlage zum Schneiden eines Werkstücks, mit einem Laser, einem Bearbeitungskopf, einer Benutzerschnittstelle zur Spezifikation einer Schneidlinie, einer Steuervorrichtung zum Steuern einer Bewegung des Bearbeitungskopfes entlang der Schneidlinie relativ zu dem jeweiligen Werkstück und zum Steuern einer Mehrzahl von Prozessgrössen eines Schneidprozesses und von der Steuervorrichtung ansteuerbare Stellglieder zum Beeinflussen der jeweiligen Prozessgrössen;
- Fig. 2: eine schematische Darstellung einer Schneidlinie mit einem Richtungswechsel in Form einer Ecke auf einem Werkstück und einer der Schneidlinie folgenden Schneidbahn eines Laserstrahls und der jeweiligen Lage des Laserstrahls für verschiedene Zeitpunkte;
- Fig. 3: einen zeitlichen Verlauf der Geschwindigkeit des Bearbeitungskopfes der Laserschneidanlage gemäss Fig. 1 beim Schneiden entlang der Schneidlinie gemäss Fig. 2;
- Fig. 4: eine Darstellung (linke Seite) eines Sollwertes der Leistung des Laserstrahls als Funktion der Geschwindigkeit des Bearbeitungskopfes und eine Darstellung (rechte Seite) eines zeitlichen Verlaufs der Leistung des Laserstrahls, welcher dem zeitlichen Verlauf der Geschwindigkeit des Bearbeitungskopfes der Laserschneidanlage gemäss Fig. 3 entspricht;
- Fig. 5: a) wie die Darstellungen gemäss Fig. 4, jedoch für die Lage einer Fokussierungsoptik des Bearbeitungskopfes gemäss Fig. 1;
b) wie die Darstellungen gemäss Fig. 4, jedoch für die Lage einer Prozessgas-Düse des Bearbeitungskopfes gemäss Fig. 1;
c) wie die Darstellungen gemäss Fig. 4, jedoch für den Druck eines Prozessgases;
- Fig. 6: wie Fig. 2, jedoch mit unterschiedlichen Lagen des Laserstrahls als Funktion der Zeit;
- Fig. 7: einen zeitlichen Verlauf der Geschwindigkeit des Bearbeitungskopfes der Laserschneidanlage gemäss Fig. 1 beim Schneiden entlang der Schneidlinie gemäss Fig. 6;
- Fig. 8: a) eine Darstellung (linke Seite) einer anderen Variante für den Sollwert der Leistung des Laserstrahls als Funktion der Geschwindigkeit des Bearbeitungskopfes und eine Darstellung (rechte Seite) eines zeitlichen Verlaufs der Leistung des Laserstrahls, welcher dem zeitlichen Verlauf der Geschwindigkeit des Bearbeitungskopfes der Laserschneidanlage gemäss Fig. 7 entspricht;
b) wie a), jedoch für die Lage einer Fokussierungsoptik des Bearbeitungskopfes gemäss Fig. 1;
c) wie a), jedoch für den Druck eines Prozessgases;
- Fig. 9: eine schematische Darstellung einer kreisförmigen Schneidlinie auf einem Werkstück und einer der Schneidlinie folgenden Schneidbahn eines Laserstrahls und der jeweiligen Lage des Laserstrahls für verschiedene Zeitpunkte;
- Fig. 10: einen zeitlichen Verlauf der Geschwindigkeit des Bearbeitungskopfes der Laserschneidanlage gemäss Fig. 1 beim Schneiden entlang der Schneidlinie gemäss Fig. 9.

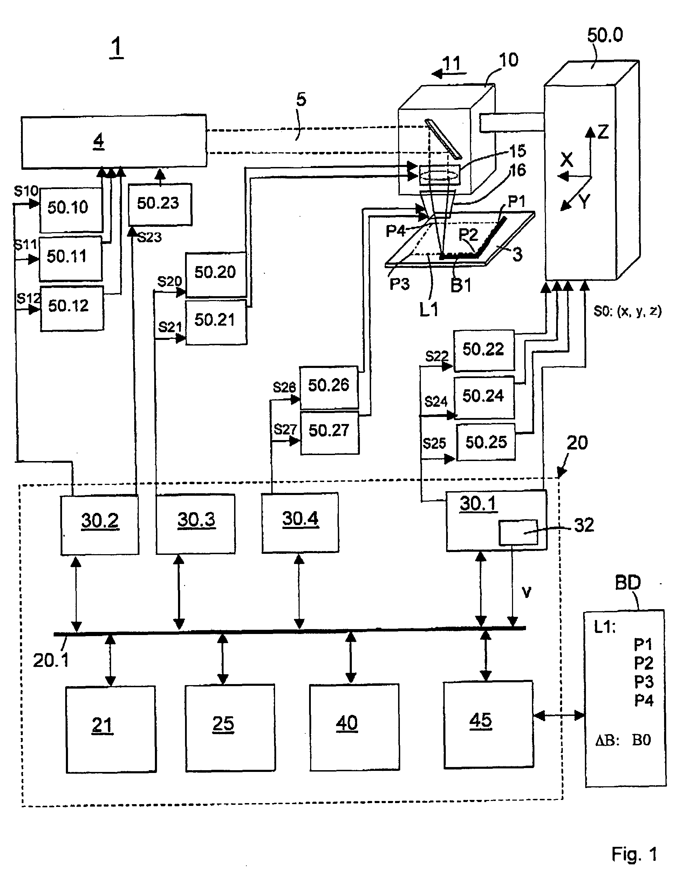

Fig. 1 zeigt eine erfindungsgemässe Laserschneidanlage 1 zum Schneiden eines Werkstücks mit einem Laserstrahl 5. Die Laserschneidanlage 1 umfasst einen Laser 4 zur Erzeugung des Laserstrahls 5, einen bewegbaren Bearbeitungskopf 10 zur Platzierung des Laserstrahls 5 auf dem jeweiligen Werkstück und eine Steuervorrichtung 20 zum Steuern einer Bewegung des Bearbeitungskopfes 10 entlang einer Schneidlinie relativ zu dem jeweiligen Werkstück und zum Steuern einer Mehrzahl von Prozessgrössen eines Schneidprozesses.

Die Laserschneidanlage 1 umfasst ferner eine Benutzerschnittstelle 45, über die ein Benutzer der Laserschneidanlage 1 der Steuervorrichtung 20 bei Bedarf Benutzerdaten BD zuführen kann, welche die Definition eines von der Laserschneidanlage 1 auszuführenden Schneidauftrags enthalten. Im vorliegenden Fall ist die Benutzerschnittstelle 45 ein Bestandteil der Steuervorrichtung 20.

Im vorliegenden Beispiel ist die Laserschneidanlage 1 beim Schneiden eines Werkstücks 3 längs einer Schneidlinie L1 dargestellt. L1 ist im vorliegenden Fall ein Rechteck mit vier Eckpunkten P1, P2, P3 und P4, welche jeweils einen Richtungswechsel von 90° markieren. Dementsprechend enthalten die Benutzerdaten BD zur Definition eines entsprechenden Schneidauftrags die Koordinaten dieser Eckpunkte P1, P2, P3 und P4. Wie dargestellt umfassen die Benutzerdaten weiterhin eine Spezifikation der beim Schneiden jeweils einzuhaltenden Mindest-Bahngenauigkeit ΔB, d.h. der jeweils zulässigen maximalen Abweichung der jeweiligen Schneidbahn des Laserstrahls 5 von einer Schneidkurve für den Fall "kleiner" (minimaler) Richtungswechsel. Im vorliegenden Beispiel ist ΔB ein Wert B0 zugeordnet. Die gemäss dem vorliegenden Beispiel erzeugte, der Schneidlinie L1 folgende Schneidbahn des Laserstrahls 5 ist in Fig. 1 mit B1 bezeichnet.

Wie Fig. 1 andeutet, weist der Bearbeitungskopf 10 eine verstellbare Fokussierungsoptik 15 zur Fokussierung des Laserstrahls 5 auf das Werkstück 3 auf. Am Bearbeitungskopf 10 ist weiterhin - an der dem Werkstück 3 zugewandten Seite - eine Düse 16 für Prozessgase angeordnet, mit welcher das jeweilige Prozessgas in der Ausbreitungsrichtung des Laserstrahls 5 auf das Werkstück 3 geleitet werden kann.

Während der Durchführung eines Schneidprozesses muss die Steuervorrichtung 20 eine Reihe variabler Grössen kontrollieren und kann zu diesem Zweck mittels Steuersignalen eine Reihe von Stellgliedern ansteuern, welche diese variablen Grössen - abhängig von den jeweiligen Steuersignalen - beeinflussen.

Die jeweilige Position des Bearbeitungskopfes 10, welche durch Koordinaten x, y, z festgelegt ist, kann mit einem Stellglied 50.0 zur Positionierung des Bearbeitungskopfes 10 beeinflusst werden, welches mehrere Antriebe umfasst, um die räumliche Lage des Bearbeitungskopfs 10 durch eine Überlagerung von drei voneinander unabhängigen Bewegungen in drei verschiedenen Richtungen X, Y, Z verändern zu können. Ein Pfeil 11 gibt jeweils die momentane Bewegungsrichtung des Bearbeitungskopfes 10 und somit die Richtung der Geschwindigkeit v des Bearbeitungskopfes 10 an.

Die Steuervorrichtung kontrolliert ferner eine Menge G von Prozessgrössen des Schneidprozesses. Eine erste Teilmenge G1 der Prozessgrössen umfasst ausschliesslich Prozessgrössen, welche einen Einfluss auf die zum Schneiden zur Verfügung stehende Leistung des Laserstrahls haben, während eine zweite Teilmenge G2 der Prozessgrössen ausschliesslich Prozessgrössen umfasst, welche keinen Einfluss auf die zum Schneiden zur Verfügung stehende Leistung des Laserstrahls haben.

Die Teilmenge G1 umfasst im vorliegenden Beispiel die folgenden Prozessgrössen des Schneidprozesses:
- die Leistung LL des Laserstrahls 5
- eine Pulsdauer Tp eines Laserpulses
- einen zeitlichen Abstand ΔT zwischen aufeinanderfolgenden Laserpulsen

Die Teilmenge G2 umfasst im vorliegenden Beispiel die folgenden Prozessgrössen des Schneidprozesses:
- die räumliche Lage DF der Fokussierungsoptik 15 zur Fokussierung des Laserstrahls 5 relativ zum Werkstück 3
- der Strahldurchmesser D0 des Laserstrahls 5
- eine Spezifikation einer Betriebsart ModL des Lasers 4 zur Erzeugung des Laserstrahls 5 (wahlweise kontinuierlicher Betrieb oder gepulster Betrieb des Lasers 4)
- eine Spezifikation einer Bahngenauigkeit δB (Abweichung der Schneidbahn von der spezifizierten Schneidlinie)
- eine räumliche Verschiebung DS des Fokuspunktes des Laserstrahls bezüglich der Schneidlinie, um zu erreichen, dass der Rand der Schneidbahn mit der Schneidlinie übereinstimmt (Bahnkorrektur)
- die räumliche Lage DD der Düse 16 für Prozessgas relativ zum Werkstück 3
- eine Spezifikation AG einer Art eines Prozessgases
- der jeweilige Druck PG eines Prozessgases

Es sei darauf hingewiesen, dass die vorstehende Aufzählung von Prozessgrösse der Teilmenge G2 nicht abschliessend ist: Die Aufzählung kann natürlich ergänzt werden um weitere Prozessgrössen, die aus Sicht eines Fachmanns die genannte Definition für die Teilmenge G2 erfüllen.

Die Prozessgrössen der Teilmenge G1 können mit Stellgliedern 50.10, 50.11 und 50.12 beeinflusst werden. Diese können zu diesem Zweck von der Steuervorrichtung 20 mit Steuersignalen angesteuert werden, die jeweils Sollwerte S10, S11 bzw. S12 dieser Prozessgrössen repräsentieren.

Die Prozessgrössen der Teilmenge G2 können mit Stellgliedern 50.20 - 50.27 beeinflusst werden. Diese können zu diesem Zweck von der Steuervorrichtung 20 mit Steuersignalen angesteuert werden, die jeweils Sollwerte S20 - S27 dieser Prozessgrössen repräsentieren.

Die folgende Tabelle I gibt einen Überblick über die jeweiligen variablen Grössen und Stellglieder und jeweils zugehörigen Sollwerte:

**Tabelle I**

| Grösse | Stellglied | Sollwert | Bedeutung |
|---|---|---|---|
| x, y, z | 50.0 | S0 | Position Bearbeitungskopf 10 |
| LL | 50.10 | S10 | Leistung des Laserstrahls 5 |
| Tp | 50.11 | S11 | 'Pulsdauer |
| ΔT | 50.12 | S12 | Pulsabstand |
| DF | 50.20 | S20 | Lage der Fokussierungsoptik |
| D0 | 50.21 | S21 | Strahldurchmesser |
| δB | 50.22 | S22 | Bahngenauigkeit |
| ModL | 50.23 | S23 | Betriebsart des Lasers |
| DS | 50.24 | S24 | Verschiebung des Fokuspunktes |
| DD | 50.25 | S25 | Lage der Düse für Prozessgas |
| AG | 50.26 | S26 | Art eines Prozessgases |
| PG | 50.27 | S27 | Druck eines Prozessgases |

Die Steuervorrichtung 20 umfasst einen Bus 20.1, der eine Kommunikation aller Komponenten der Steuervorrichtung 20 untereinander ermöglicht (eine Kommunikation durch eine Übermittlung von Daten oder Signalen ist in Fig. 1 durch Pfeile angedeutet). Die wesentlichen Komponenten der Steuerung sind: ein Prozessor 21; ein Programmspeicher 25, welcher ein Betriebssystem und alle Steuerprogramme der Steuervorrichtung 20 umfasst; ein Speicher 40 für Daten; die Benutzerschnittstelle 45 und Kontrolleinheiten 30.1, 30.2, 30.3 und 30.4.

Die Kontrolleinheit 30.1 kontrolliert die jeweilige Bewegung des Bearbeitungskopfes 5 und ist zu diesem Zweck in der Lage, Steuersignale an das Stellglied 50.0 zu übermitteln, welche Steuersignale den jeweiligen Sollwert S0 der Position (x, y, z) des Bearbeitungskopfes 10 repräsentieren.

Die Stellglieder 50.22, 50.24 und 50.25 sind von der Kontrolleinheit 30.1 für die Kontrolle der Bewegung des Bearbeitungskopfes 10 ansteuerbar und wirken ihrerseits auf das Stellglied 50.0, um die Position (x, y, z) des Bearbeitungskopfes 10 in Abhängigkeit von Sollwerten S22 ,S24 und S25 zu beeinflussen. Dadurch wird erreicht, dass situationsbedingt unter Kontrolle des Prozessors 21 und der jeweiligen Steuerprogramme der Steuervorrichtung 20 die Bahngenauigkeit δB angepasst und/oder die Verschiebung DS des Fokuspunktes bezüglich der jeweiligen Schneidlinie (Bahnkorrektur) verändert werden kann und/oder die Lage DD der Düse 16 verändert werden kann.

Die Kontrolleinheit 30.2 dient der Kontrolle des Lasers 4 und ist zu diesem Zweck in der Lage, Steuersignale an die Stellglieder 50.10, 50.11, 50.12 bzw. 50.23 zu übermitteln, welche Steuersignale den jeweiligen Sollwert S10 der Leistung LL des Laserstrahls 5, den jeweiligen Sollwert S11 der Pulsdauer Tp, den jeweiligen Sollwert S12 des Pulsabstands ΔT und den jeweiligen Sollwert S23 für die Betriebsart des Lasers 4 repräsentieren.

Die Kontrolleinheit 30.3 dient der Kontrolle der Fokussierungsoptik 15 und ist zu diesem Zweck in der Lage, Steuersignale an die Stellglieder 50.20 und 50.21 zu übermitteln, welche Steuersignale den jeweiligen Sollwert S20 für die Lage der Fokussierungsoptik 15 und den jeweiligen Sollwert S21 des Strahldurchmessers D0 des Laserstrahls 5 repräsentieren.

Die Kontrolleinheit 30.4 dient der Kontrolle der Prozessgasversorgung und ist zu diesem Zweck in der Lage zu übermitteln, Steuersignale an die Stellglieder 50.26 und 50.27, welche Steuersignale den jeweiligen Sollwert S26 für die Art AG eines Prozessgases und den jeweiligen Sollwert S27 für Druck PG eines Prozessgases repräsentieren.

Im vorliegenden Beispiel sind die jeweiligen Sollwerte S10, S11, S12, S20, S21, S22, S23, S24, S25, S26 und S27 variable Parameter, welche von der Steuervorrichtung 20 als Funktion der Geschwindigkeit v des Bearbeitungskopfes 10 variiert werden können.

Um eine momentane Anpassung dieser Parameter zu ermöglichen, verfügt die Steuervorrichtung 20 über Registriermittel 32 zum Registrieren der momentanen Geschwindigkeit v des Bearbeitungskopfes 10. Die Registriermittel 32 sind ein Bestandteil der Kontrolleinheit 30.1 und haben die Aufgabe, in regelmässigen Zeitabständen die Geschwindigkeit v zu registrieren und die jeweils registrierten Werte der Geschwindigkeit v den übrigen Komponenten der Steuervorrichtung zur Verfügung zu stellen.

Im vorliegenden Beispiel sind Werte, welche die jeweiligen Sollwerte S10, S11, S12, S20, S21, S22, S23, S24, S25, S26 und S27 als Funktion der Geschwindigkeit v annehmen, für verschiedene Geschwindigkeitswerte im Speicher 40 abgelegt. Auf diese Weise ist eine funktionelle Abhängigkeit der jeweiligen Sollwerte von der Geschwindigkeit v in der Steuereinheit 20 implementiert.

Im Betrieb der Laserschneidmaschine 1 wird die momentane Geschwindigkeit v überwacht. Unter bestimmten Bedingungen, die in den Steuerprogrammen de Steuervorrichtung 20 festgelegt sind, werden - abhängig von Änderungen der momentanen Geschwindigkeit - die einzelnen Stellglieder 50.10, 50.11, 50.12, 50.20, 50.21, 50.22, 50.23, 50.24, 50.25, 50.26 und 50.7 mit Steuersignalen angesteuert, die geänderte Werte für die Sollwerte S10, S11, S12, S20, S21, S22, S23, S24, S25, S26 und S27 repräsentieren. Auf diese Weise können die den jeweiligen Stellgliedern zugeordneten Prozessgrössen in Abhängigkeit von der Geschwindigkeit des Bearbeitungskopfes 10 jeweils beeinflusst werden.

Es sei darauf hingewiesen, dass nicht alle Sollwerte S10, S11, S12, S20, S21, S22, S23, S24, S25, S26 und S27 unter denselben Bedingungen und zur gleichen Zeit geändert werden müssen.

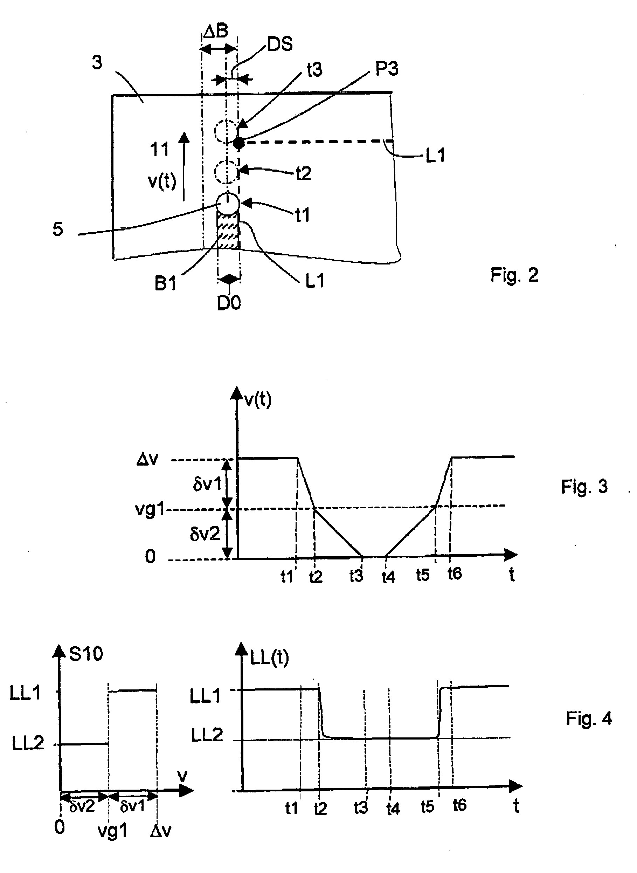

Die Figuren 2-5 zeigen ein erstes Beispiel, wie Änderungen der jeweiligen Prozessgrössen im Falle der Laserschneidanlage 1 veranlasst werden können.

Gemäss Fig. 2 wird angenommen, dass der Laserstrahl 5 in Richtung des Pfeils 11 mit der Geschwindigkeit v(t) und einer räumlichen Verschiebung DS entlang der vorgegebenen Schneidlinie L1 bewegt wird, um eine Schneidbahn B1 der Breite D0 entlang der Schneidlinie L1 zu erzeugen. Die Schneidlinie L1 weist am Punkt P3 eine Ecke mit einem Winkel von 90° auf (Richtungswechsel). In der dargestellten Situation bewegt sich der Fokuspunkt des Laserstrahls 5 zunächst auf die Ecke am Punkt P3, um anschliessend am Punkt P3 die Richtung um 90° zu ändern. In Fig. 1 sind - durch Kreise aus durchgezogenen oder gestrichelten Linien - die jeweiligen Positionen des Laserstrahls 5 an drei verschiedenen Zeitpunkten t1, t2 und t3 dargestellt.

Fig. 3 zeigt den entsprechenden Verlauf der Geschwindigkeit v(t), mit der sich der Laserstrahl 5 entlang der Schneidlinie L1 bewegt, um eine vorgegebene Bahngenauigkeit einzuhalten. Wie ersichtlich kann der Laserstrahl in den jeweils von dem Punkt P3 entfernten Abschnitten der Schneidbahn B1 mit einer maximalen Geschwindigkeit v=Δv bewegt werden, während die Geschwindigkeit im Zeitraum t1 bis t3 bei der Bewegung auf den Punkt P3 auf v=0 reduziert wird. Die Geschwindigkeit v wird demach insgesamt in einem Geschwindigkeitsbereich der Breite Δv variiert.

Im vorliegenden Beispiel wird angenommen, dass der Geschwindigkeitsbereich Δv aus zwei aneinandergrenzenden Teilbereichen δv1 und δv2 besteht, welche durch eine Grenzgeschwindigkeit vg1 getrennt sind, wobei der Teilbereich δv1 oberhalb der Grenzgeschwindigkeit vg1 und der Teilbereich δv2 unterhalb der Grenzgeschwindigkeit vg1 liegt. Im vorliegenden Fall wird die Grenzgeschwindigkeit vg1 am Zeitpunkt t2 vom oberen Geschwindigkeitsbereich δv1 her unterschritten und am Zeitpunkt t5 vom unteren Geschwindigkeitsbereich δv2 her überschritten.

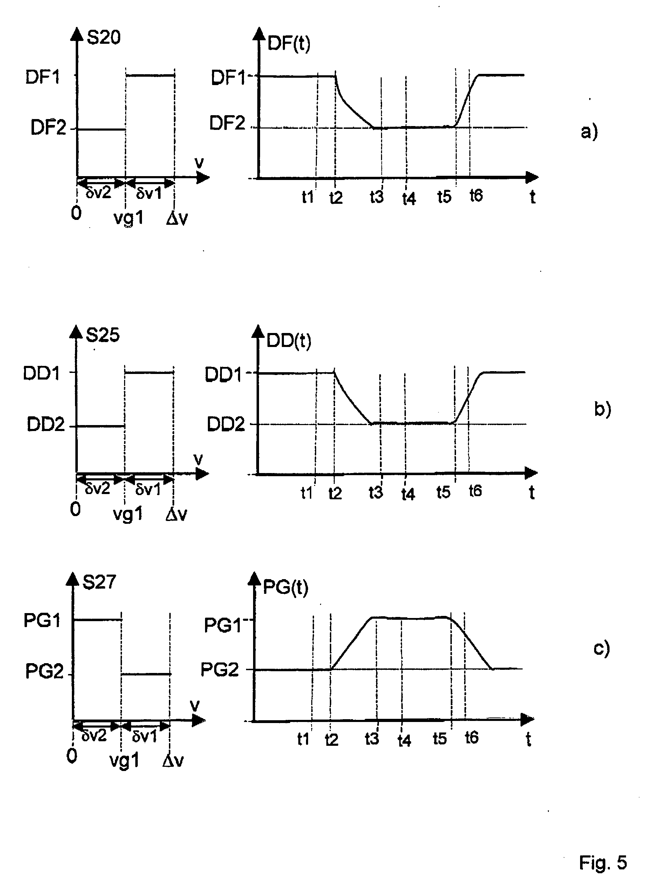

Wie die Figuren 4 und 5 andeuten, wird im vorliegenden Fall angenommen, dass jeder der Sollwerte der jeweiligen Prozessgrössen in den beiden Teilbereich δv1 und δv2 jeweils konstant ist, wobei jeder der Sollwerte in den beiden Teilbereichen δv1 und 8v2 jeweils unterschiedliche Werte annimmt. Jeder der Sollwerte kann demnach im gesamten Geschwindigkeitsbereich Δv nur zwei verschiedene Werte annehmen.

Wenn die Geschwindigkeit v sich im oberen Geschwindigkeitsbereich δv1 befindet, dann wird dasjenige Stellglied, das einer bestimmten Prozessgrösse zugeordnet ist, mit einem Signal angesteuert, dass denjenigen Sollwert repräsentiert, welcher dem oberen Geschwindigkeitsbereich δv1 zugeordnet ist. Wenn die Geschwindigkeit v die Grenzgeschwindigkeit vg1 unterschreitet und in den unteren Geschwindigkeitsbereich δv2 übergeht, wird dasjenige Stellglied, das einer bestimmten Prozessgrösse zugeordnet ist, mit einem Signal angesteuert, dass denjenigen Sollwert repräsentiert, welcher dem unteren Geschwindigkeitsbereich δv2 zugeordnet ist. Analog wird beim Übergang der Geschwindigkeit v vom unteren Geschwindigkeitsbereich δv2 in den oberen Geschwindigkeitsbereich δv1 wieder ein Signal erzeugt, dass denjenigen Sollwert repräsentiert, welcher dem oberen Geschwindigkeitsbereich δv1 zugeordnet ist. Demnach wird die jeweilige Prozessgrösse im Zeitraum zwischen t1 und t6 jeweils zwischen zwei Werten hin- und her geschaltet.

Fig. 4 zeigt dementsprechend den Sollwert S10 als Funktion der Geschwindigkeit v in den Teilbereichen δv1 und δv2 und den zeitlichen Verlauf der Leistung LL des Laserstrahls 5, welche sich aus dem zeitlichen Verlauf der Geschwindigkeit v gemäss Fig. 3 und der funktionellen Abhängigkeit des Sollwertes S10 als Funktion der Geschwindigkeit v ergibt.

Die Fig. 5 zeigt dementsprechend die Sollwerte S20, S25 und S27 als Funktion der Geschwindigkeit v in den Teilbereichen δv1 und δv2 und die zeitlichen Verläufe der Lage DF der Fokussierungsoptik, der Lage DD der Düse 16 für Prozessgas und des Drucks PG eines Prozessgases, welche zeitlichen Verläufe sich aus dem zeitlichen Verlauf der Geschwindigkeit v gemäss Fig. 3 und den funktionellen Abhängigkeiten der Sollwerte S20, S25 und S27 als Funktion der Geschwindigkeit v ergeben.

Es sei darauf verwiesen, dass die zeitlichen Verläufe der jeweiligen Prozessgrössen beim Übergang der Geschwindigkeit v von einem der Teilbereiche δv1 bzw. δv2 zum jeweils anderen Teilbereich wesentlich vom dynamischen Verhalten der jeweiligen Stellglieder abhängt. Während die jeweiligen Stellglieder jeweils nach dem Überschreiten oder Unterschreiten der Grenzgeschwindigkeit mit einem konstanten Signal (dem jeweiligen Sollwert entsprechend) angesteuert werden, kann es unterschiedlich lange dauern, bis die jeweiligen Prozessgrössen den vorgegebenen Sollwert erreichen. Manche Prozessgrössen zeigen beim Überschreiten der Grenzgeschwindigkeit vg1 einen abrupten (sprunghaften) übergang als Funktion der Zeit (z.B. die Laserleistung LL gemäss Fig. 4), andere Prozessgrössen zeigen dagegen einen kontinuierlichen Übergang als Funktion der der Zeit (z.B. die Grössen DF, DD und PG gemäss Fig. 5).

Der in Fig. 3 dargestellte Verlauf der Geschwindigkeit v als Funktion der Zeit t ist nur eine von mehreren möglichen Varianten, nach denen die Steuervorrichtung 20 die Bewegung des Bearbeitungskopfes 10 - abhängig davon, wie die Steuervorrichtung 20 konfiguriert ist - entlang der Schneidlinie L1 gemäss Fig. 2 steuern könnte. Abweichend von dem in Fig. 3 dargestellten Verlauf könnte die Steuervorrichtung 20 beispielsweise so konfiguriert sein, dass der Bearbeitungskopf 10 nach Erreichen des Punktes P3 zur Zeit t3 sofort den vorgesehen Richtungswechsel um 90° vollziehen und zur Zeit t3 sofort wieder beschleunigt wird. Gemäss dieser Variante wäre die Geschwindigkeit v nur zum Zeitpunkt t3 gleich 0, für t>t3 würde die Geschwindigkeit v kontinuierlich auf den Wert Δv steigen. In einer weiteren Variante könnte die Steuervorrichtung 20 beispielsweise so konfiguriert sein, dass der Bearbeitungskopf 10 den Richtungswechsel am Punkt P3 mit einer Geschwindigkeit vollzieht, die zwar im Vergleich zum Wert Δv reduziert ist, aber während des gesamten zeitlichen Verlaufs niemals gleich 0 wird. In diesem Fall bleibt der Bearbeitungskopf 10 während des Richtungswechsels am Punkt P3 in Bewegung.

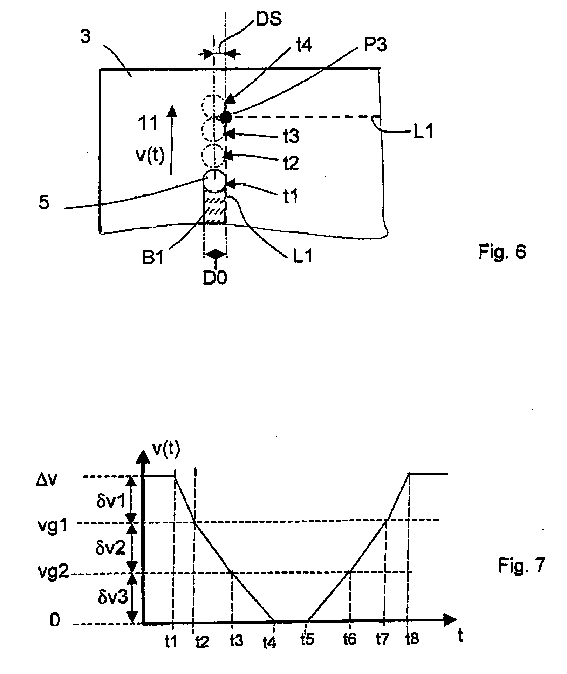

Die Fig. 6-8 zeigen ein weiteres Beispiel, wie Änderungen der jeweiligen Prozessgrössen im Falle der Laserschneidanlage 1 veranlasst werden können.

Das Beispiel gemäss Figuren 6-8 ähnelt dem Beispiel gemäss Fig. 2-5 insofern, als die Schneidlinie L1 gemäss Fig. 6 mit der Schneidlinie in Fig. 2 identisch ist, d.h. im vorliegenden Beispiel soll eine Ecke am Punkt P3 mit einem Winkel vom 90° geschnitten werden, wobei die Schneidbahn B1 in relativ grossen Distanzen vom Punkt P3 mit der maximalen Geschwindigkeit v=Δv geschnitten werden soll und die Geschwindigkeit im Bereich des Punktes P3 auf v=0 reduziert wird. Dementsprechend überstreicht die Geschwindigkeit v einen Geschwindigkeitsbereich Δv.

Im Unterschied zum Beispiel gemäss Fig. 2-5 wird im Beispiel gemäss Fig. 6-8 der Geschwindigkeitsbereich Δv in drei aneinandergrenzende Teilbereiche δv1, δv2 und δv3 zerlegt, wobei jeweils zwei benachbarte Teilbereiche (δv1 und δv2 bzw. δv2 und δv3) durch eine Grenzgeschwindigkeit vg1 bzw. vg2 getrennt sind. In diesem Beispiel werden demnach drei Geschwindigkeitsbereiche bzw. zwei Grenzgeschwindigkeiten nacheinander in drei Zeitintervallen zwischen den Zeitpunkten t1 und t4 durchlaufen (Fig. 7).

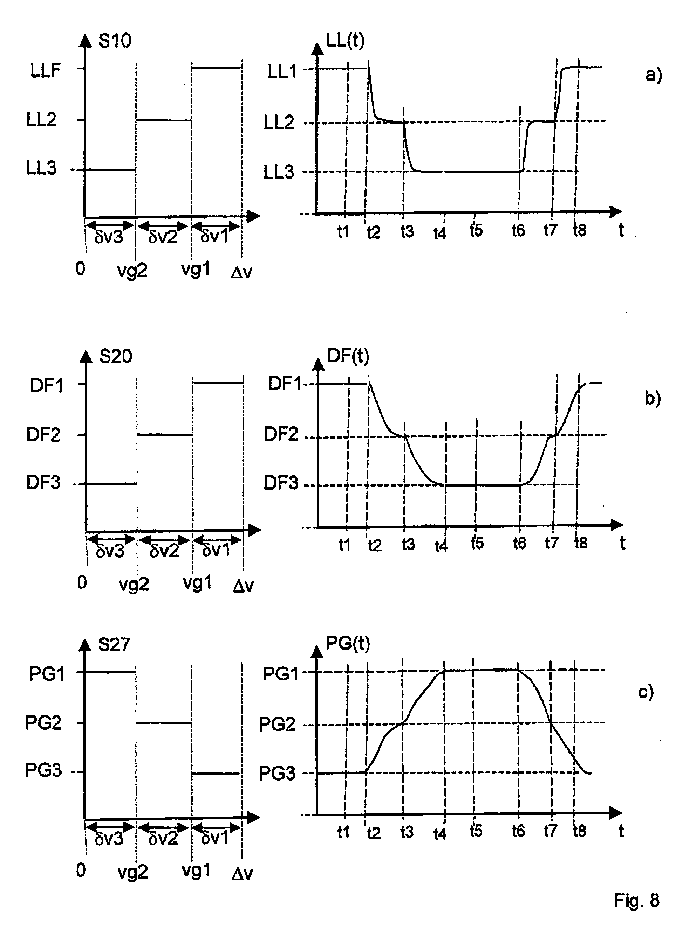

Im vorliegenden Beispiel wird angenommen, dass der Sollwert einer der Prozessgrössen in jedem der Teilbereiche δv1, δv2 und δv3 jeweils einen konstanten Wert annimmt, wobei die den verschiedenen Bereichen zugeordneten Werte jeweils unterschiedlich sind. Die funktionelle Abhängigkeit des Sollwerts einer Prozessgrösse kann demnach im gesamten Geschwindigkeitsbereich Δv durch drei unterschiedliche Werte charakterisiert werden. Die Fig. 8 zeigt entsprechende Beispiele für die Abhängigkeit der Sollwerte S10, S20 und S27. Dementsprechend werden die jeweiligen Stellglieder nacheinander mit verschiedenen Signalen angesteuert, die jeweils drei verschiedene Sollwerte repräsentieren. Dementsprechend zeigen auch die zeitlichen Verläufe der jeweiligen Prozessgrössen LL, DF und PG jeweils drei Stufen, die den drei verschiedenen Werten entsprechen, welche die Sollwerte S10, S20 und S27 in den verschiedenen Teilbereiche δv1, δv2 und δv3 annehmen können.

Der in Fig. 7 dargestellte Verlauf der Geschwindigkeit v als Funktion der Zeit t ist nur eine von mehreren möglichen Varianten, nach denen die Steuervorrichtung 20 die Bewegung des Bearbeitungskopfes 10 - abhängig davon, wie die Steuervorrichtung 20 konfiguriert ist - entlang der Schneidlinie L1 gemäss Fig. 6 steuern könnte. Abweichend von dem in Fig. 7 dargestellten Verlauf könnte die Steuervorrichtung 20 beispielsweise so konfiguriert sein, dass der Bearbeitungskopf 10 nach Erreichen des Punktes P3 zur Zeit t4 sofort den vorgesehen Richtungswechsel um 90° vollziehen und zur Zeit t4 sofort wieder beschleunigt wird. Gemäss dieser Variante wäre die Geschwindigkeit v nur zum Zeitpunkt t4 gleich 0, für t>t4 würde die Geschwindigkeit v kontinuierlich auf den Wert Δv steigen. In einer weiteren Variante könnte die Steuervorrichtung 20 beispielsweise so konfiguriert sein, dass der Bearbeitungskopf 10 den Richtungswechsel am Punkt P3 mit einer Geschwindigkeit vollzieht, die zwar im Vergleich zum Wert Δv reduziert ist, aber während des gesamten zeitlichen Verlaufs niemals gleich 0 wird. In diesem Fall bleibt der Bearbeitungskopf 10 während des Richtungswechsels am Punkt P3 in Bewegung.

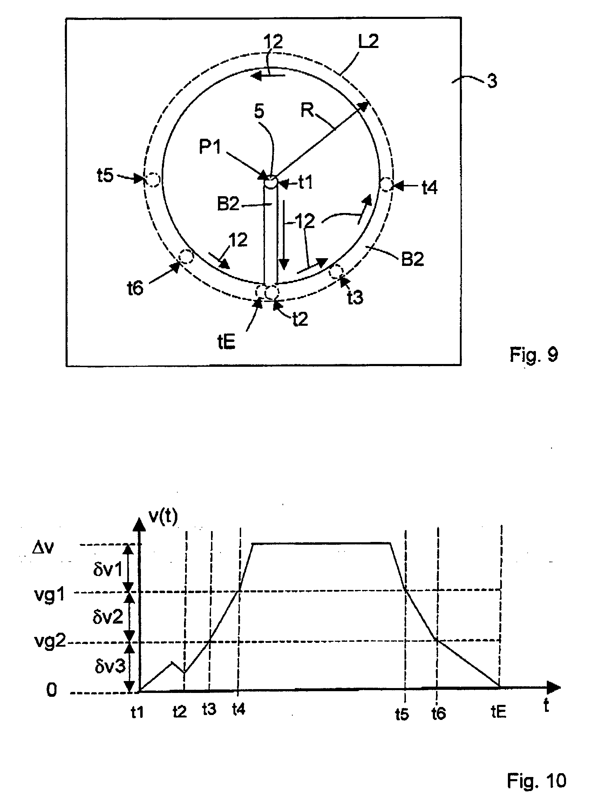

Fig. 9 und 10 zeigen ein weiteres Beispiel für Schneiden mit einer variablen Schneidgeschwindigkeit.

Fig. 9 zeigt ein Werkstück 3 mit einer kreisförmigen Schneidlinie L2 mit einem Radius R. Im vorliegenden Beispiel beginnt der Schneidprozess, indem zum Zeitpunkt t1 mit dem Laserstrahl 5 im Mittelpunkt P1 der Schneidlinie L2 ein Loch gebohrt wird. Am Zeitpunkt t1 ist deshalb die Geschwindigkeit des Bearbeitungskopfes v=0. Mit dem Bezugszeichen 12 versehene Pfeile kennzeichnen den Weg des Bearbeitungskopfes 10 während des Schneidprozesses. Die momentane Position des Laserstrahls 5 zu verschiedenen Zeitpunkten t1, t2, t3, t4, t5, t6 und tE ist in Fig. 9 durch einzelne Kreise mit durchgezogenen bzw. gestrichelten Linien gekennzeichnet. Ausgehend vom Punkt P1 wird der Laserstrahl 5 bzw. der Bearbeitungskopf 10 zunächst radial in Richtung auf die Schneidlinie L2 beschleunigt und, kurz bevor der Laserstrahl 5 die Schneidlinie L2 zum Zeitpunkt t2 erreicht hat, wieder geringfügig gebremst. Anschliessend folgt die Schneidbahn B2 - nach einem Richtungswechsel um 90° - der Innenseite der Schneidlinie L2 und wird dabei weiter beschleunigt, bis nach ca. einem Viertel des Kreisumfangs der Schneidlinie die maximale Geschwindigkeit Δv erreicht ist (Zeitpunkt t4). Diese maximale Geschwindigkeit wird beibehalten, bis das Werkstück 3 entlang eines Kreissegmentes geschnitten wurde, dessen Länge in etwa 3/4 des gesamten Umfangs der Schneidlinie L2 beträgt (Zeitpunkt t5). Anschliessend wird die Geschwindigkeit v allmählich auf v=O reduziert, bis der Schneidprozess beendet werden kann (Zeitpunkt tE). Der dem Zeitpunkt tE zugeordnete Kreis in Fig.9 kennzeichnet die Position, die der Laserstrahl 5 am Ende der Schneidbahn B2 einnimmt, welches Ende nach einem Umlauf in Richtung der Pfeile 12 entlang der Schneidlinie L2 erreicht ist.

Fig. 10 zeigt den entsprechenden zeitlichen Verlauf der Geschwindigkeit. Ähnlich wie im Beispiel gemäss Fig. 6-8 wird der Geschwindigkeitsbereich Δv gemäss Fig. 10 in drei aneinandergrenzende Teilbereiche δv1, δv2 und δv3 eingeteilt.

Entsprechend kann angenommen werden, dass der Sollwert einer der Prozessgrössen in jedem der Teilbereiche δv1, δv2 und δv3 jeweils einen konstanten Wert annimmt, wobei die den verschiedenen Bereichen zugeordneten Werte jeweils unterschiedlich sind. Dementsprechend können die jeweiligen Prozessgrössen in drei verschiedenen Schritten angepasst werden (wie im Beispiel gemäss Fig. 6-8).

Natürlich ist es auch möglich, den Geschwindigkeitsbereich Δv in mehr als drei Teilbereiche einzuteilen und die funktionale Abhängigkeit der Sollwerte der Prozessgrössen von der Geschwindigkeit durch mehr als drei konstante Werte festzulegen.

In den genannten Beispielen gemäss Fig. 2-5 bzw. Fig. 6-8 bzw. Fig. 9-10 kann es vorteilhaft sein, wenn die Ansteuerung der jeweiligen Stellglieder bei einem Übergang der Geschwindigkeit v des Bearbeitungskopfes 10 zwischen zwei aneinandergrenzenden Teilbereichen δv1 und δv2 bzw. δv2 und δv3 nur dann von der Steuervorrichtung 20 veranlasst wird, wenn die Geschwindigkeit des Bearbeitungskopfes 10 sich in demjenigen Teilbereich, in den der Übergang erfolgt, mindestes während einer vorgegebenen Zeitspanne befindet. Zu diesem Zweck ist die Steuervorrichtung so ausgebildet, dass die Steuervorrichtung die jeweilige Zeitspanne, innerhalb welcher die jeweilige Geschwindigkeit des Bearbeitungskopfes innerhalb des Teilbereichs liegt, jeweils im Voraus ermittelt und das jeweilige Steuersignal nur dann erzeugt wird, wenn die jeweils ermittelte Zeitspanne grösser als ein vorgegebener Wert ist. Durch diese Massnahme wird erreicht, das eine Änderung eines Sollwerts unterdrückt wird, wenn die Änderung des Sollwerts nicht länger als eine vorgegebene Zeitdauer wirksam ist. Im Beispiel gemäss Fig. 9-10 könnte beispielsweise ein Steuersignal, das einen dem Teilbereich δv1 Sollwert repräsentiert, nur dann von der Steuervorrichtung 20 erzeugt werden, wenn die Zeitdifferenz t5-t4 grösser als eine vorgegebene minimale Zeitdauer Δt ist.

## Patentansprüche

1. Laserschneidanlage (1) zum Schneiden eines Werkstücks (3) mit einem Laserstrahl (5) entlang einer Schneidlinie (L1, L2) mit einer variablen Schneidgeschwindigkeit (v),
mit einem bewegbaren Bearbeitungskopf (10) zur Platzierung des Laserstrahls (5) auf dem jeweiligen Werkstück (3)),
mit einer Benutzerschnittstelle (45) zur Spezifikation der jeweiligen Schneidlinie (L1, L2) und zur Spezifikation einer Mindest-Bahngenauigkeit (ΔB) des Laserstrahls (5),
mit einer Steuervorrichtung (20) zum Steuern einer Bewegung des Bearbeitungskopfes (10) entlang der Schneidlinie (L1, L2) relativ zu dem jeweiligen Werkstück und zum Steuern einer Mehrzahl von Prozessgrössen (LL, Tp, ΔT, DF, D0, ModL, δB, DS, DD, AG, PG) eines Schneidprozesses,
bei welcher Bewegung während des Schneidprozesses eine Schneidbahn (B1, B2) des Laserstrahls entlang der Schneidlinie (L1, L2) erzeugbar ist,
wobei eine erste Teilmenge (G1) der Prozessgrössen ausschliesslich eine oder mehrere Prozessgrössen (LL, Tp, ΔT) umfasst, welche einen Einfluss auf die zum Schneiden zur Verfügung stehende Leistung des Laserstrahls haben, und wobei eine zweite Teilmenge (G2) der Prozessgrössen ausschliesslich eine oder mehrere Prozessgrössen (DF, D0, ModL, δB, DS, DD, AG, PG) umfasst, welche keinen Einfluss auf die zum Schneiden zur Verfügung stehende Leistung des Laserstrahls haben,
wobei die Steuervorrichtung (20)
a) derart ausgebildet ist, dass die Bewegung des Bearbeitungskopfes (10) während des Schneidprozesses von der Steuervorrichtung (20) derart steuerbar ist, dass die Schneidbahn (B1, B2) des Laserstrahls der Schneidlinie (L1, L2) innerhalb der Mindest-Bahngenauigkeit (ΔB) folgt, wobei ein kinematischer Zustand des Bearbeitungskopfes durch Erhöhen oder Verringern der Geschwindigkeit (v) des Bearbeitungskopfes (10) relativ zum Werkstück (3) veränderbar ist
b) Registriermittel (32) zum Registrieren einer Veränderung des kinematischen Zustands des Bearbeitungskopfes (10) und/oder mindestens eines Wertes der Geschwindigkeit (v) des Bearbeitungskopfes (10) und/oder eines Wertes für eine Veränderung der Geschwindigkeit des Bearbeitungskopfes umfasst,
c) mindestens eine Prozessgrösse der ersten Teilmenge (LL, Tp, ΔT) mittels der Steuervorrichtung (20) bei oder nach einer Veränderung des kinematischen Zustands des Bearbeitungskopfes in Abhängigkeit von mindestens einem der jeweils registrierten Werte (vg1, vg2) für die Geschwindigkeit des Bearbeitungskopfes und/oder von mindestens einem der jeweils registrierten Werte für eine Veränderung der Geschwindigkeit (δv1, δv2, δv3) des Bearbeitungskopfes (10) veränderbar ist,
**Dadurch gekennzeichnet, dass**
mindestens eine Prozessgrösse der zweiten Teilmenge (DF, D0, ModL, δB, DS, DD, AG, PG) mittels der Steuervorrichtung (20) bei oder nach einer Änderung des kinematischen Zustands des Bearbeitungskopfes in Abhängigkeit von der Geschwindigkeit (v) des Bearbeitungskopfes veränderbar ist, wobei die Änderung der jeweiligen Prozessgrösse in Abhängigkeit von mindestens einem variablen Steuerparameter (S20, S21, S22, S23, S24, S25, S26, S27) steuerbar ist, dessen jeweiliger Wert von der Steuervorrichtung nach in der Steuervorrichtung implementierten Regeln in Abhängigkeit von mindestens einem der jeweils registrierten Werte (vg1, vg2) der Geschwindigkeit des Bearbeitungskopfes und/oder von mindestens einem der jeweils registrierten Werte für eine Veränderung (δv1, δv2, δv3) der Geschwindigkeit des Bearbeitungskopfes (10) bestimmbar ist.

2. Laserschneidanlage (1) nach Anspruch 1, wobei, die erste Teilmenge der Prozessgrössen mindestens eine der folgenden Prozessgrössen (i)-(iii) umfasst:
(i) die Leistung (LL) des Laserstrahls,
(ii) eine Pulsdauer (Tp) eines Laserpulses,
(iii) ein zeitlicher Abstand (ΔT) zwischen aufeinanderfolgenden Laserpulsen und/oder eine Laserpuls-Rate,
und wobei die zweite Teilmenge der Prozessgrössen mindestens eine der folgenden Prozessgrössen (iv)-(xi) umfasst
(iv) eine Spezifikation einer Lage (DF) einer Fokussierungsoptik zur Fokussierung des Laserstrahls relativ zum Werkstück,
(v) eine Spezifikation eines Strahldurchmessers (D0) des Laserstrahls,
(vi) eine Spezifikation einer Betriebsart (ModL) eines Lasers zur Erzeugung des Laserstrahls,
(vii) eine Spezifikation einer Bahngenauigkeit (δB)
(viii) eine räumliche Verschiebung (DS) eines Fokuspunktes des Laserstrahls bezüglich der Schneidlinie
(ix) Lage (DD) einer Prozessgas-Düse relativ zum Werkstück,
(x) eine Spezifikation einer Art (AG) eines Prozessgases,
(xi) ein Druck eines Prozessgases (PG).

3. Laserschneidanlage (1) nach einem der Ansprüche 1 oder 2, wobei
die jeweilige Prozessgrösse (LL, Tp, ΔT, DF, D0, ModL, δB, DS, DD, AG, PG) mit mindestens einem dieser Prozessgrösse zugeordneten Stellglied (50.10, 50.11, 50.12, 50.20, 50.21, 50.22, 50.23, 50.24, 50.25, 50.26, 50.27) beeinflussbar ist und das jeweilige Stellglied mit einem von der Steuervorrichtung erzeugbaren, einen Sollwert (S10, S11, S12, S20, S21, S22, S23, S24, S25, S26, S27) der Prozessgrösse repräsentierenden Steuersignal ansteuerbar ist, wobei der Sollwert der variable Steuerparameter ist.

4. Laserschneidanlage nach Anspruch 3, wobei
der Sollwert (S10-S27) der jeweiligen Prozessgrösse von der Geschwindigkeit (v) des Bearbeitungskopfes (10) abhängig ist und
für die Prozessgrösse eine funktionelle Abhängigkeit des Sollwertes der Prozessgrösse von der Geschwindigkeit des Bearbeitungskopfes in der Steuervorrichtung implementiert (40) ist
und von der Steuervorrichtung (20) mindestens ein Steuersignal zum Ansteuern des dieser Prozessgrösse zugeordneten Stellgliedes erzeugbar ist, welches Steuersignal denjenigen Sollwert der jeweiligen Prozessgrösse repräsentiert, der einem der jeweils registrierten Werte für die Geschwindigkeit des Bearbeitungskopfes gemäss der implementierten funktionellen Abhängigkeit des Sollwertes der jeweiligen Prozessgrösse von der Geschwindigkeit des Bearbeitungskopfes zugeordnet ist.

5. Laserschneidanlage nach Anspruch 4, wobei die Geschwindigkeit des Bearbeitungskopfes über einen vorgegebenen Geschwindigkeitsbereich (Δv) veränderbar ist und
die funktionelle Abhängigkeit des Sollwertes der Prozessgrösse von der Geschwindigkeit des Bearbeitungskopfes derart implementiert ist, dass verschiedene Teilbereiche (δv1, δv2, δv3) des vorgegebenen Geschwindigkeitsbereichs definiert sind und der Sollwert (LL, DF, DD, PG) der Prozessgrösse in mindestens zweien der Teilbereiche (δv1, δv2, δv3) jeweils verschiedene Werte (LL1, LL2; DF1, DF1; DD1, DD2; PG1, PG2) annimmt.

6. Laserschneidanlage nach Anspruch 5, wobei der Sollwert der Prozessgrösse in jedem der Teilbereiche (δv1, δv2, δv3) jeweils einen konstanten Wert annimmt.

7. Laserschneidanlage nach einem der Ansprüche 4- 6, mit einem für die Steuervorrichtung zugänglichen Speicher (40), in dem die jeweilige Werte, die der Sollwert für vorgegebene Werte der Geschwindigkeit des Bearbeitungskopfes annimmt, abgelegt sind.

8. Laserschneidanlage nach einem der Ansprüche 4-7, wobei die Laserschneidanlage eine Implementierung eines von der Steuervorrichtung ausführbaren Algorithmus zur Berechnung des jeweiligen Sollwerts für einen vorgegebenen Wert der Geschwindigkeit umfasst.

9. Laserschneidanlage nach einem der Ansprüche 5-8, wobei der Bearbeitungskopf (10) während der Veränderung des kinematischen Zustands des Bearbeitungskopfes bei einer Bewegung des Bearbeitungskopfes derart abbremsbar ist, dass die Geschwindigkeit des Bearbeitungskopfes eine obere Grenzgeschwindigkeit (vg1, vg2) eines bestimmten Teilbereichs (δv2, δv3) erreicht oder unterschreitet oder dass die Geschwindigkeit des Bearbeitungskopfes zeitlich nacheinander die jeweilige obere Grenzgeschwindigkeit (vg1, vg2) mehrerer bestimmter Teilbereiche (δv2, δv3) des vorgegebenen Geschwindigkeitsbereichs erreicht oder unterschreitet.

10. Laserschneidanlage nach Anspruch 9, wobei das jeweilige Erreichen oder Unterschreiten der oberen Grenzgeschwindigkeit des jeweiligen Teilbereichs von der Steuervorrichtung (20) registrierbar ist
und
ein Steuersignal zur Ansteuerung des Stellgliedes (50.10, 50.11, 50.12, 50.20, 50.21, 50.22, 50.23, 50.24, 50.25, 50.26, 50.27) nach der Registrierung des jeweiligen Erreichens oder Unterschreitens der oberen Grenzgeschwindigkeit (vg1, vg2) des jeweiligen Teilbereichs (δv2, δv3) erzeugbar ist, wobei das jeweilige Steuersignal einen Sollwert repräsentiert, welcher einem von der Steuervorrichtung registrierten Wert der Geschwindigkeit innerhalb des jeweiligen Teilbereichs zugeordnet ist.

11. Laserschneidanlage nach einem der Ansprüche 9 oder 10, wobei
die Änderung des kinematischen Zustands ausführbar ist:
a) falls die Schneidlinie (L1, L2) mindestens einen Abschnitt umfasst, welcher einen Richtungswechsel aufweist, bei einer Bewegung des Bearbeitungskopfes auf einen Richtungswechsel (P3) hin, und/oder
b) am Ende des Schneidprozesses vor Erreichen eines Endpunktes der Schneidlinie (B2).

12. Laserschneidanlage nach einem der Ansprüche 5-9, wobei der Bearbeitungskopf während der Veränderung des kinematischen Zustands des Bearbeitungskopfes (10) derart beschleunigbar ist, dass die Geschwindigkeit (v) des Bearbeitungskopfes (10) eine untere Grenzgeschwindigkeit (vg1, vg2) eines bestimmten Teilbereichs (δv1, δv2) erreicht oder überschreitet oder dass die Geschwindigkeit (vg1, vg2) des Bearbeitungskopfes (10) zeitlich nacheinander die jeweilige untere Grenzgeschwindigkeit (vg1, vg2) mehrerer bestimmter Teilbereiche (δv1, δv2) des vorgegebenen Geschwindigkeitsbereichs erreicht oder überschreitet.

13. Laserschneidanlage nach Anspruch 12, wobei das jeweilige Erreichen oder Überschreiten der unteren Grenzgeschwindigkeit des jeweiligen Teilbereichs mittels der Registriermittel (32) registrierbar ist
und
ein Steuersignal zur Ansteuerung des Stellgliedes (50.10, 50.11, 50.12, 50.20, 50.21, 50.22, 50.23, 50.24, 50.25, 50.26, 50.27) nach der Registrierung des jeweiligen Erreichens oder Überschreitens der unteren Grenzgeschwindigkeit (vg1, vg2) des jeweiligen Teilbereichs (δv1, δv2) erzeugbar ist, wobei das jeweilige Steuersignal einen Sollwert repräsentiert, welcher einem von der Steuervorrichtung (20) registrierten Wert der Geschwindigkeit innerhalb des jeweiligen Teilbereichs (δv1, δv2) zugeordnet ist.

14. Laserschneidanlage nach einem der Ansprüche 11-13, wobei die Änderung des kinematischen Zustands ausführbar ist:
a) falls die Schneidlinie (L1) mindestens einen Abschnitt umfasst, welcher einen Richtungswechsel (P3) aufweist, bei einer Bewegung des Bearbeitungskopfes von einem Richtungswechsel weg, und/oder
b) am Beginn des Schneidprozesses bei einer von einem Anfangspunkt (P1) der Schneidlinie (L2) weg gerichteten Bewegung des Bearbeitungskopfes (10).

15. Laserschneidanlage nach einem der Ansprüche 9 oder 13, wobei von der Steuervorrichtung (20) die Zeitspanne (t5-t4), innerhalb welcher die jeweilige Geschwindigkeit (v) des Bearbeitungskopfes innerhalb des Teilbereichs (δv1) liegt, im Voraus ermittelbar ist
und das Steuersignal nur erzeugbar ist, wenn die jeweils ermittelte Zeitspanne grösser als ein vorgegebener Wert ist.

## Claims

1. A laser cutting system (1) for cutting a workpiece (3) with a laser beam (5) along a cutting line (L1, L2) at a variable cutting speed (v),
comprising a movable machining head (10) for placing the laser beam (5) on the respective workpiece (3),
comprising a user interface (45) for specifying the respective cutting line (L1, L2) and for specifying a minimum path accuracy (ΔB) of the laser beam (5),
comprising a control device (20) for controlling a movement of the machining head (10) along the cutting line (L1, L2) relative to the respective workpiece and for controlling a plurality of process variables (LL, Tp, ΔT, DF, D0, ModL, δB, DS, DD, AG, PG) of a cutting process,
wherein with said movement during the cutting process a cutting path (B1, B2) of the laser beam along the cutting line (L1, L2) can be created,
wherein a first subset (G1) of the process variables comprises exclusively one or a plurality of process variables (LL, Tp, ΔT), which influence the power of the laser beam available for cutting, and wherein a second subset (G2) of the process variables comprises exclusively one or a plurality of process variables (DF, D0, ModL, δB, DS, DD, AG, PG), which have no influence on the power of the laser beam available for cutting,
wherein the control device (20)
a) is embodied such that the movement of the machining head (10) can be controlled by the control device (20) during the cutting process such that the cutting path (B1, B2) of the laser beam follows the cutting line (L1, L2) within the minimum path accuracy (ΔB), wherein a kinematic state of the machining head can be changed by increasing or reducing the speed (v) of the machining head (10) relative to the workpiece (3)
b) comprises registering means (32) for registering a change of the kinematic state of the machining head (10) and/or at least of a value of the speed (v) of the machining head (10) and/or of a value for a change of the speed of the machining head,
c) at least one process variable of the first subset (LL, Tp, ΔT) can be changed by means of the control device (20) in response to or after a change of the kinematic state of the machining head depending on at least one of the respectively registered values (vg1, vg2) for the speed of the machining head and/or of at least one of the respectively registered values for a change of the speed (δv1, δy2, δv3) of the machining head (10), **characterized in that**
at least one process variable of the second subset (DF, D0, ModL, δB, DS, DD, AG, PG) can be changed by means of the control device (20) in response to or after a change of the kinematic state of the machining head depending on the speed (v) of the machining head, wherein the change of the respective process variable can be controlled depending on at least one variable control parameter (S20, S21, S22, S23, S24, S25, S26, S27), the respective value of which can be determined by the control device based on rules implemented in the control device depending on at least one of the respectively registered values (vg1, vg2) of the speed of the machining head and/or of at least one of the respectively registered values for a change (δv1, δy2, δv3) of the speed of the machining head (10).

2. The laser cutting system (1) according to claim 1, wherein the first subset of the process variables comprises at least one of the following process variables (i) - (iii) :
(i) the power (LL) of the laser beam,
(ii) a pulse duration (Tp) of a laser pulse,
(iii) a chronological spacing (ΔT) between subsequent laser pulses and/or a laser pulse rate,
and wherein the second subset of the process variables comprises at least one of the following process variables (iv) - (xi)
(iv) a specification of a position (DF) of a focusing optics for focusing the laser beam relative to the workpiece,
(v) a specification of a beam diameter (D0) of the laser beam,
(vi) a specification of an operating mode (ModL) of a laser for creating the laser beam,
(vii) a specification of a path accuracy (δB),
(viii) a spatial displacement (DS) of a focal point of the laser beam relative to the cutting line,
(ix) position (DD) of a process gas nozzle relative to the workpiece,
(x) a specification of a type (AG) of a process gas,
(xi) a pressure of a process gas (PG).

3. The laser cutting system (1) according to one of claims 1 or 2, wherein
the respective process variable (LL, Tp, ΔT, DF, D0, ModL, δB, DS, DD, AG, PG) can be influenced with at least one actuator (50.10, 50.11, 50.12, 50.20, 50.21, 50.22, 50.23, 50.24, 50.25, 50.26, 50.27), which is assigned to this process variable, and the respective actuator can be controlled by means of a control signal, which can be created by the control device and which represents a setpoint value (S10, S11, S12, S20, S21, S22, S23, S24, S25, S26, S27) of the process variable, wherein the setpoint value is the variable control parameter.

4. The laser cutting system according to claim 3,
wherein
the setpoint value (S10-S27) of the respective process variable is dependent on the speed (v) of the machining head (10) and
a functional dependency of the setpoint value of the process variable on the speed of the machining head is implemented for the process variable in the control device (40)
and the control device (20) can create at least one control signal for controlling the actuator, which is assigned to this process variable, with said control signal representing that setpoint value of the respective process variable, which is assigned to one of the respectively registered values for the speed of the machining head according to the implemented functional dependency of the setpoint value of the respective process variable on the speed of the machining head.

5. The laser cutting system according to claim 4,
wherein
the speed of the machining head can be changed via a predetermined speed range (Δv) and
the functional dependency of the setpoint value of the process variable on the speed of the machining head is implemented such that different partial ranges (δv1, δy2, δv3) of the predetermined speed range are defined and that the setpoint value (LL, DF, DD, PG) of the process variable in each case assumes different values (LL1, LL2; DF1, DF2; DD1, DD2; PG1, PG2) in at least two of the partial ranges (δv1, δy2, δv3).

6. The laser cutting system according to claim 5,
wherein
the setpoint value of the process variable in each case assumes a constant value in each of the partial ranges (δv1, δy2, δy3).

7. The laser cutting system according to one of claims 4-6, comprising a storage (40), which can be accessed by the control device and in which the respective values, which the setpoint value assumes for predetermined values of the speed of the machining head, are stored.

8. The laser cutting system according to one of claims 4-7, wherein
the laser cutting system comprises an implementation of an algorithm, which can be carried out by the control device, for computing the respective setpoint value for a predetermined value of the speed.

9. The laser cutting system according to one of claims 5-8, wherein
the machining head (10) can be slowed down during the change of the kinematic state of the machining head in response to a movement of the machining head such that the speed of the machining head reaches or falls below an upper limit speed (vg1, vg2) of a certain partial range (δv2, δv3) or that the speed of the machining head reaches or falls below the respective upper limit speed (vg1, vg2) of a plurality of certain partial ranges (δv2, δv3) of the predetermined speed range successively.

10. The laser cutting system according to claim 9,
wherein
the respective reaching or falling below of the upper limit speed of the respective partial range can be registered by the control device (20)
and
a control signal can be created for controlling the actuator (50.10, 50.11, 50.12, 50.20, 50.21, 50.22, 50.23, 50.24, 50.25, 50.26, 50.27) after the registration of the respective reaching or falling below of the upper limit speed (vg1, vg2) of the respective partial range (δv2, δy3), wherein the respective control signal represents a setpoint value, which is assigned to a value of the speed within the respective partial range, which is registered by the control device.

11. The laser cutting system according to one of claims 9 or 10, wherein
the change of the kinematic state can be carried out:
a) in the event that the cutting line (L1, L2) comprises at least one section, which encompasses a change in direction in response to a movement of the machining head towards a change in direction (P3) and/or
b) at the end of the cutting process before an end point of the cutting line (B2) has been reached.

12. The laser cutting system according to one of claims 5-9, wherein
the machining head can be accelerated during the change of the kinematic state of the machining head (10) such that the speed (v) of the machining head (10) reaches or exceeds a lower limit speed (vg1, vg2) of a certain partial range (δv1, δv2) or that the speed (vg1, vg2) of the machining head (10) reaches or exceeds the respectively lower limit speed (vg1, vg2) of a plurality of certain partial ranges (δv1, δv2) of the predetermined speed range successively.

13. The laser cutting system according to claim 12,
wherein
the respective reaching or exceeding of the lower limit speed of the respective partial range can be registered by means of the registering means (32)
and
a control signal for controlling the actuator (50.10, 50.11, 50.12, 50.20, 50.21, 50.22, 50.23, 50.24, 50.25, 50.26, 50.27) can be created after the registration of the respective reaching or exceeding of the lower limit speed (vg1, vg2) of the respective partial range (δv1, δv2), wherein the respective control signal represents a setpoint value, which is assigned to a value of the speed within the respective partial range (δv1, δv2), which is registered by the control device (20).

14. The laser cutting system according to one of claims 11-13, wherein
the change of the kinematic state can be carried out:
a) in the event that the cutting line (L1) comprises at least one section, which encompasses a change in direction (P3), in response to a movement of the machining head away from a change in direction and/or
b) at the beginning of the cutting process in response to a movement of the machining head (10) directed away from a starting point (P1) of the cutting line (L2).

15. The laser cutting system according to one of claims 9 or 13,
wherein the period of time (t5-t4), within which the respective speed (v) of the machining head lies within the partial range (δv1), is in each case determined in advance by the control device (20)
and that the control signal can only be created when the respectively determined period of time is greater than a predetermined value.

## Revendications

1. Découpeuse au laser (1) destinée à découper une pièce d'oeuvre (3), avec un rayon laser (5) le long d'une ligne de coupe (L1, L2), avec une vitesse de découpe (v) variable,
avec une tête d'usinage (10) mobile pour le placement du rayon laser (5) sur la pièce d'oeuvre (3) concernée,
avec une interface utilisateur (45) pour la spécification de la ligne de coupe (L1, L2) concernée et pour la spécification d'une précision de trajectoire (ΔB) minimale du rayon laser (5),
avec un dispositif de commande (20) destiné à commander un déplacement de la tête d'usinage (10) le long de la ligne de découpe (L1, L2) par rapport à la pièce d'oeuvre concernée et destiné à commander une pluralité de grandeurs de processus (LL, Tp, ΔT, DF, D0, ModL, δB, DS, DD, AG, PG) d'un processus de découpe,
lors duquel déplacement pendant le processus de découpe, une trajectoire de découpe (B1, B2) du rayon laser le long de la ligne de découpe (L1, L2) peut être générée,
une première quantité partielle (G1) des grandeurs de processus comprenant exclusivement une ou plusieurs grandeurs de processus (LL, Tp, ΔT), lesquelles ont une influence sur la puissance du rayon laser mise à disposition pour la découpe et une deuxième quantité partielle (G2) des grandeurs de processus comprenant exclusivement une ou plusieurs grandeurs de processus (DF, D0, ModL, δB, DS, DD, AG, PG), lesquelles n'ont aucune influence sur la puissance du rayon laser mise à disposition pour la découpe,
le dispositif de commande (20)
a) étant conçu de telle sorte que le déplacement de la tête d'usinage (10) par le dispositif de commande (20) pendant le processus de découpe soit susceptible d'être commandé de telle sorte que la trajectoire de découpe (B1, B2) du rayon laser suive la ligne de découpe (L1, L2) en restant dans la précision de trajectoire (ΔB) minimale, une position cinématique de la tête d'usinage étant variable par augmentation ou diminution de la vitesse (v) de la tête d'usinage (10) par rapport à la pièce d'oeuvre (3),
b) comprenant des moyens d'enregistrement (32) destinés à enregistrer une variation du la position cinématique de la tête d'usinage (10) et/ou au moins une valeur de la vitesse (v) de la tête d'usinage (10) et/ou une valeur pour une variation de la vitesse de la tête d'usinage,
c) au moins une grandeur de processus de la première quantité partielle (LL, Tp, ΔT) étant variable à l'aide du dispositif de commande (20) pendant ou après une variation de la position cinématique de la tête d'usinage en fonction d'au moins l'une des valeurs (vg1, vg2) respectivement enregistrées pour la vitesse de la tête d'usinage et/ou d'au moins l'une des valeurs enregistrées pour une variation de la vitesse (δv1, δv2, δv3) de la tête d'usinage (10),
**caractérisée en ce**
**qu'**au moins une grandeur de processus de la deuxième quantité partielle (DF, D0, ModL, δB, DS, DD, AG, PG) est variable à l'aide du dispositif de commande (20), avant ou après une modification de la position cinématique de la tête d'usinage en fonction de la vitesse (v) de la tête d'usinage, la variation de la grandeur de processus concernée pouvant être commandée en fonction d'au moins un paramètre de commande (S20, S21, S22, S23, S24, S25, S26, S27) variable dont la valeur respective est définissable par le dispositif de commande selon des règles implémentées dans le dispositif de commande, en fonction d'au moins l'une des valeurs (vg1, vg2) respectivement enregistrées de la vitesse de la tête d'usinage et/ou d'au moins l'une des valeurs enregistrées pour une variation (δv1, δv2, δv3) de la vitesse de la tête d'usinage (10).

2. Découpeuse au laser (1) selon la revendication 1,
la première quantité partielle des grandeurs de processus comprenant au moins l'une des grandeurs de processus (i) à (iii) suivantes :
(i) la puissance (LL) du rayon laser,
(ii) une durée de pulsations (Tp) d'une impulsion laser,
(iii) un intervalle de temps (ΔT) entre des impulsions laser successives et/ou un taux d'impulsions laser,
et la deuxième quantité partielle des grandeurs de processus comprenant au moins l'une des grandeurs de processus (iv) à (xi) suivantes :
(iv) une spécification d'une position (DF) d'une optique de focalisation destinée à focaliser le rayon laser par rapport à la pièce d'oeuvre,
(v) une spécification d'un diamètre de rayon (D0) du rayon laser,
(vi) une spécification d'un mode de fonctionnement (ModL) d'un laser pour la génération du rayon laser,
(vii) une spécification d'une précision de trajectoire (δB)
(viii) un déplacement dans l'espace (DS) d'un point de focalisation du rayon laser par rapport à la ligne de découpe,
(ix) la position (DD) d'une buse à gaz de processus par rapport à la pièce d'oeuvre,
(x) une spécification d'un type (AG) d'un gaz de processus,
(xi) une pression d'un gaz de processus (PG).

3. Découpeuse au laser (1) selon l'une quelconque des revendications 1 ou 2,
la grandeur de processus (LL, Tp, ΔT, DF, D0, ModL, δB, DS, DD, AG, PG) pouvant être influencée à l'aide d'un organe de réglage (50.10, 50.11, 50.12, 50.20, 50.21, 50.22, 50.23, 50.24, 50.25, 50.26, 50.27) associé à ladite grandeur de processus et l'organe de réglage concerné pouvant être activé par un signal de commande susceptible d'être généré par le dispositif de commande, représentant une valeur de consigne (S10, S11, S12, S20, S21, S22 S23, S24, S25, S26, S27) pour la grandeur de processus, la valeur de consigne étant la paramètre de commande variable.

4. Découpeuse au laser selon la revendication 3,
la valeur de consigne (S10 à S27) de la grandeur de processus concernée dépendant de la vitesse (v) de la tête d'usinage (10) et
une dépendance fonctionnelle de la valeur de consigne pour la grandeur de processus par rapport à la vitesse de la tête d'usinage étant implémentée (40) dans le dispositif de commande, pour la grandeur de processus
et le dispositif de commande (20) étant susceptible de générer au moins un signal de commande pour activer l'organe de réglage associé à ladite grandeur de processus, lequel signal de commande représentant la valeur de consigne pour la dimension de processus concernée qui est associée à l'une des valeurs enregistrées pour la vitesse de la tête d'usinage, conformément à la dépendance fonctionnelle implémentée de la valeur de consigne pour la grandeur de processus concernée par rapport à la vitesse de la tête d'usinage.

5. Découpeuse au laser selon la revendication 4,
la vitesse de la tête d'usinage étant variable dans un ordre de vitesses (Δv) prédéterminé et
la dépendance fonctionnelle de la valeur de consigne pour la grandeur de processus par rapport à la vitesse de la tête d'usinage étant implémentée de telle sorte que différents ordres partiels (δv1, δv2, δv3) de l'ordre de vitesses prédéterminé soient définis et que la valeur de consigne (LL, DF, DD, PG) pour la grandeur de processus adopte chaque fois différentes valeurs (LL1, LL2 ; DF1, DF1 ; DD1, DD2 ; PG1, PG2) dans au moins deux des ordres partiels (δv1, δv2, δv3).

6. Découpeuse au laser selon la revendication 5,
la valeur de consigne pour la grandeur de processus adoptant chaque fois une valeur constante dans chacun des ordres partiels (δv1, δv2, δv3).

7. Découpeuse au laser selon l'une quelconque des revendications 4 à 6, avec une mémoire (40) accessible par le dispositif de commande dans laquelle sont sauvegardées les valeurs concernées qu'adopte la valeur de consigne pour des valeurs prédéterminées pour la vitesse de la tête d'usinage.

8. Découpeuse au laser selon l'une quelconque des revendications 4 à 7, la découpeuse au laser comprenant une implémentation d'un algorithme exécutable par le dispositif de commande pour le calcul de la valeur de consigne concernée pour une valeur prédéfinie pour la vitesse.

9. Découpeuse au laser selon l'une quelconque des revendications 5 à 8, lors de la variation de la position cinématique de la tête d'usinage, la tête d'usinage (10) pouvant être freinée de telle sorte que la vitesse de la tête d'usinage atteigne ou sous-dépasse une vitesse limite supérieure (vg1, vg2) d'un certain ordre partiel (δv2, δv3) ou que la vitesse de la tête d'usinage atteigne ou sous-dépasse successivement dans le temps la vitesse limite supérieure (vg1, vg2) respective de plusieurs ordres partiels définis (δv2, δv3) de l'ordre de vitesses prédéterminé.

10. Découpeuse au laser selon la revendication 9,
l'atteinte ou le sous-dépassement de la vitesse limite supérieure de l'ordre partiel concerné pouvant être enregistré(e) par le dispositif de commande (20),
et
un signal de commande pour l'activation de l'organe de commande (50.10, 50.11, 50.12, 50.20, 50.21, 50.22, 50.23, 50.24, 50.25, 50.26, 50.27) pouvant être généré après l'enregistrement de l'atteinte ou du sous-dépassement respectif de la vitesse limite supérieure (vg1, vg2) de l'ordre partiel (δv2, δv3) concerné, le signal de commande respectif représentant une valeur de consigne à laquelle est associée une valeur de la vitesse au sein de l'ordre partiel concerné, enregistrée par le dispositif de commande.

11. Découpeuse au laser selon l'une quelconque des revendications 9 ou 10,
la variation de la position cinématique étant réalisable :
a) si la ligne de découpe (L1, L2) comprend au moins un tronçon lequel présente un changement de direction, lors d'un déplacement de la tête d'usinage vers un changement de direction (P3) et/ou
b) à la fin du processus de découpe, avant l'atteinte d'un point final de la ligne de découpe (B2).

12. Découpeuse au laser selon l'une quelconque des revendications 5 à 9,
pendant la variation de la position cinématique de la tête d'usinage (10), la tête d'usinage pouvant être accélérée de telle sorte que la vitesse (v) de la tête d'usinage (10) atteigne ou dépasse une vitesse limite inférieure (vg1, vg2) d'un ordre partiel (δv1, δv2) déterminé ou que successivement dans le temps, la vitesse (vg1, vg2) de la tête d'usinage (10) atteigne ou dépasse la vitesse limite inférieure (vg1, vg2) respective de plusieurs ordres partiels définis (δv1, δv2) de l'ordre de vitesse prédéterminé.

13. Découpeuse au laser selon la revendication 12,
l'atteinte ou le dépassement respectif de la vitesse limite inférieure de l'ordre partiel respectif pouvant être enregistré(e) à l'aide des moyens d'enregistrement (32)
et
un signal de commande pour l'activation de l'organe de réglage (50.10, 50.11, 50.12, 50.20, 50.21, 50.22, 50.23, 50.24, 50.25, 50.26, 50.27) pouvant être généré après l'enregistrement de l'atteinte ou du dépassement respectif de la vitesse limite inférieure (vg1, vg2) de l'ordre partiel (δv1, δv2) concerné, le signal de commande respectif représentant une valeur de consigne à laquelle est associée une valeur de la vitesse au sein de l'ordre partiel (δv1, δv2) concerné, enregistrée par le dispositif de commande (20).

14. Découpeuse au laser selon l'une quelconque des revendications 11 à 13, la variation de le position cinématique étant réalisable :
a) si la ligne de découpe (L1) comprend au moins un tronçon lequel présente un changement de direction, lors d'un déplacement (P3) de la tête d'usinage à partir d'un changement de direction (F3) et/ou
b) au début du processus de découpe, lors d'un déplacement de la tête d'usinage (10) s'éloignant du point initial (P1) de la ligne de découpe (L2).

15. Découpeuse au laser selon l'une quelconque des revendications 9 ou 13,
le dispositif de commande (20) pouvant déterminer par avance la période (t5 - t4) pendant laquelle la vitesse (v) respective de la tête d'usinage se situe au sein de l'ordre partiel (δv1)
et le signal de commande ne pouvant être généré que si la période respectivement déterminée est supérieure à une valeur prédéterminée.
